# EUROPEAN PATENT APPLICATION

(11) **EP 1 626 588 A2**
(43) Date of publication of application: **15.02.2006**
(21) Application number: 05021747.0
(22) Date of filing: 18.03.2003
(51) Int. Cl.: H04N 15/00, A61B 1/05, H01L 21/00, H04N 3/14

(54) **Miniaturized imaging device**

(30) Priority: 18.03.2002 US 365692 P; 18.03.2002 US 365561 P; 06.12.2002 US 431261 P; 17.03.2003 US 391489; 17.03.2003 US 391490; 17.03.2003 US 391513
(62) Divisional of application: 03717997.5
(71) Applicant: Sarcos Investment LC, Salt Lake City, UT 84108 (US)
(72) Inventor: Jacobsen, Stephen C., Salt Lake City, Utah 84102 (US); Markus, David T., Salt Lake City, Utah 84108 (US); Marceau, David P., Salt Lake City, Utah 84105 (US); Pensel, Ralph, Sandy, Utah 84092 (US); Petelenz, Tomasz J., Salt Lake City, Utah 84108 (US); Wells, David, Toronto, Ontario M4G 1R8 (CA)
(74) Representative: Wombwell, Francis

(57) **Abstract**

A miniaturized imaging device, comprising:
(a) multiple imaging arrays, each carried by an SSID; and
(b) multiple GRIN lenses optically coupled to the multiple imaging arrays, respectively, wherein each of the multiple imaging arrays is optically coupled to a single GRIN lens.

## Description

### FIELD OF THE INVENTION

The invention relates generally to solid state imaging devices (SSIDs). More specifically, the invention relates to miniaturized imaging devices that are particularly suited to viewing beyond small openings and traversing small-diameter areas. These devices can be used for catheter-borne medical imaging within the anatomy of a patient, and are useful for other applications.

### BACKGROUND OF THE INVENTION

Small imaging devices that take advantage of advances in integrated circuit imaging technologies are known. Such small imaging devices can be particularly useful in medical diagnostic and treatment applications. Portions of human anatomy previously viewable only by a surgical procedure can be viewed now by a minimally invasive catheterization, provided an imaging device can be made that is small enough to view the target anatomy.

Other uses for very small imaging devices are recognized. For example, such devices can be used and are desirable for surveillance applications, for monitoring of conditions and functions within devices, and for size- and weight-critical imaging needs as are present in aerospace applications, to name a few.

While the present invention has applications in these aforementioned fields and others, the medical imaging application can be used to favorably illustrate unique advantages of the invention. The desirability of providing imaging at sites within the anatomy of living creatures, especially humans, distal of a small orifice or luminal space has long been recognized. A wide variety of types and sub-types of endoscopes have been developed for this purpose.

One advance in imaging technology which has been significant is in the area of SSIDs. Such devices, including the charge-injection device (CID), the charge-coupled device (CCD), and the complementary metal oxide semiconductor (CMOS) device, provide good alternatives to the use of bundled fiber optics, as well as to conventional miniaturized imaging devices used in endoscope applications. However, when considering a design of a catheter-borne imaging device, consideration should be given to the ability of a distal tip of the catheter to flex and bend, without breaking or becoming damaged. This is necessary to accommodate limitations of anatomy to minimize trauma, and to enable steering of the distal tip to a desired location.

Accordingly, there is a desire to manufacture smaller devices that are steerable and provide good image quality for the size.

### SUMMARY OF THE INVENTION

It has been recognized that by looking outside conventional devices and techniques, that facilitation of further miniaturization of an imaging device employing SSIDs at a distal end of a catheter or other flexible umbilical can be accomplished. In a first embodiment, a miniaturized imaging device can comprise a utility guide, an SSID, a lens, and an umbilical. The utility guide can having at least one aperture configured for supporting utilities. The SSID can be carried by the utility guide, and can include an imaging array on a top surface, and a conductive element on a side surface, wherein the imaging array is electrically coupled to the conductive element. The lens can be optically coupled to the imaging array. The umbilical, including a conductive line, can be carried by the at least one aperture, wherein the conductive line is electrically coupled to the conductive element on the side surface of the SSID. In one embodiment, the conductive element can be a metal trace that is electrically coupled to the imaging array through a conductive pad on the top surface. Further, the utility guide and the SSID can be a single integrated component. Still further, the conductive line can be connected to the conductive element through a direct bonding joint rather than wire bonding.

In an alternative embodiment, a miniaturized imaging device can comprise an SSID, a lens, and an umbilical. The SSID can include, as an integral structure, an imaging array electrically coupled to a conductive pad, wherein the SSID further includes at least one utility aperture passing therethrough. The lens can be optically coupled to the imaging array. The umbilical, including a conductive line carried by the at least one aperture, wherein the conductive line is directly electrically coupled to the conductive pad. The conductive line can be directly electrically coupled to the conductive pad by a bonding joint rather than wire bonding. Additionally, a plurality of apertures through the SSID can also be present.

With respect to both of the above embodiments, the respective miniaturized imaging devices can further comprise a light source or a fluid source carried by the device. Additionally, a processor and a monitor remote from the SSID can also be present, enabling real-time viewing of an image obtained by the SSID. This is typically accomplished through the umbilical, which includes the conductive line. The conductive line of the umbilical can provide electrical wires configured for carrying power, ground, clock signal, and output signal.

In a more detailed embodiment, an optical insert can be positioned optically between the lens and the imaging array. Such an insert can be another lens, such as a wide angle lens, or can be a fiber optic or color filter. An example of a color filter insert includes one configured for providing multiple colors from a monochromatic camera image. Additionally, with respect to either embodiment, the SSID can be an imaging device selected from the group consisting of CCD, CID, and CMOS, and the lens can be a GRIN lens.

Turning to a related method, a method of operating a microcamera can comprise the steps of (a) optically coupling a lens to an imaging array of an SSID; (b) defining a plurality of conductive paths, wherein at least one of the conductive paths is configured along multiple non-coplanar surfaces of the SSID; (c) powering the SSID through a first of the conductive paths; and (d) receiving signal from the SSID through a second of the conductive paths.

In another embodiment, a method of operating a microcamera can comprise the steps of (a) optically coupling a lens to an imaging array of an SSID; (b) powering the SSID through a first conductive path, wherein the first conductive path is defined by a first conductive umbilical wire, a first conductive pad, and a first bonding joint directly coupling a terminal end of the first conductive umbilical wire to the first conductive pad; and (c) transmitting signal from the imaging array for viewing along a second conductive path, wherein the second conductive path is defined by a second conductive pad, a second conductive umbilical wire, and a second bonding joint directly coupling the second conductive pad to a terminal end of the second conductive umbilical wire.

With respect to both of these methods, other optional steps can be included, such as the step of illuminating an area around the lens, providing ground and control to the SSID through a third conductive path and a fourth conductive path, respectively. In further detail, the step of optically coupling can include the step of directly attaching the lens to the imaging array, or the step of optically coupling can include the step of interposing an optical insert between the lens and the imaging array.

A method of making an SSID, such as those described above, can include the steps of (a) forming features within a predetermined area of a manufacture substrate having a thickness, wherein the features include a conductive pad electrically coupled to an imaging array; (b) removing portions of the manufacture substrate outside of the predetermined area such that the thickness outside the predetermined area is reduced, thereby forming an SSID attached to a thinned manufacture substrate, wherein the SSID has a top surface including the conductive pad, and a side surface adjacent to the top surface; (c) three-dimensionally masking the SSID such that the conductive pad and the side surface are exposed; and (d) applying a conductive material to the conductive pad and the side surface to electrically couple the conductive pad and the side surface. Optional steps are also included. For example, the step of removing portions of the manufacture substrate is accomplished by masking the predetermined area with a first photoresist material to protect the predetermined area from manufacture substrate removal, can be carried out. Further, the step of removing the first photoresist material prior to the step of three-dimensionally masking the SSID is also optional. In one embodiment, a subsequent step of removing the SSID from the thinned manufacture substrate after the conductive material has been applied can be carried out. The step of three-dimensionally masking the SSID is with a second photoresist material, or removing the second masking material after the step of applying the conductive material are also optional steps.

In another embodiment, a method of making an SSID can comprise steps of (a) forming features within a predetermined area of a manufacture substrate having a thickness, wherein the features include a conductive pad electrically coupled to an imaging array; (b) removing portions of the manufacture substrate outside of the predetermined area such that the thickness outside the predetermined area is reduced, thereby forming an SSID attached to a thinned manufacture substrate; (c) forming utility apertures through the SSID; and (d) removing the SSID from the thinned manufacture substrate.

In another alternative embodiment, a miniaturized imaging device can comprise an SSID including an imaging array; and a GRIN lens optically coupled to the imaging array of the SSID. The GRIN lens can be substantially cylindrical in shape. In one embodiment, the GRIN lens has a first flat end for receiving light, a second flat end for passing the light to the imaging array, and an outer curved surface surrounded by an opaque coating or sleeve member to prevent unwanted light from entering the GRIN lens. Optical coupling of the GRIN lens to the imaging array can be by direct contact, such as by using an optically clear epoxy, or by interposing an intermediate optical device between the GRIN lens and the imaging array.

The SSID can further comprise a conductive pad configured for making an electrical connection to the imaging array. In this configuration, an umbilical, including a conductive line, can be configured for powering and receiving signal from imaging array through the conductive pad. In one embodiment, the conductive line includes multiple conductive wires connected to multiple respective conductive pads through soldering, wire bonding, solder bumping, eutectic bonding, electroplating, or conductive epoxy. The SSID can be CCD, CID, or CMOS imaging device.

A utility guide coupled to the device and configured for carrying utilities can also be included. Such utilities can include a light source or a fluid source carried by at least one of the SSID and the utility guide. The utilities, which can include the conductive line, can be electrically coupled to a processor and a monitor remote from the SSID, enabling real-time viewing of the image obtained by the SSID.

In another embodiment, a method of viewing within or beyond a small luminal opening can comprise the steps of (a) inserting a microcamera into a small luminal opening, wherein the microcamera include a GRIN lens optically coupled to an imaging array of an SSID; (b) illuminating an area around the GRIN lens within or beyond the small luminal opening; (c) receiving light or photon energy in the GRIN lens reflected by contents within or beyond luminal opening, thereby providing focused light or photon energy at the imaging array; (d) converting the focused light or photon energy to digital data; and (e) processing the digital data for viewing on a monitor remote from the microcamera. Such a method can be carried out using a GRIN lens as the lens element. The GRIN lens can be configured to have a first flat end for receiving light, a second flat end for passing the light to the imaging array, and an outer curved surface surrounded by an opaque coating or sleeve member to prevent unwanted light from entering the GRIN lens. The SSID can be a CCD, CID, or CMOS imaging device.

Another miniaturized imaging device is also disclosed, comprising multiple imaging arrays, each carried by an SSID; and multiple GRIN lens optically coupled to the multiple imaging arrays, respectively. In one embodiment, the multiple imaging arrays can be carried by a common SSID. In another embodiment, the multiple imaging arrays can be carried by multiple SSIDs, respectively. In either embodiment, if the multiple imaging arrays are configured in a coplanar arrangement, stereoscopic imaging can be carried out. Alternatively, if multiple SSIDs are used, multiple microcameras can be positioned along a common umbilical. In yet another arrangement, multiple imaging arrays can be positioned to provide multiple non-parallel views.

In still another embodiment, a miniaturized imaging device can comprise a lens, an SSID, an umbilival, and an adaptor. The lens can be a GRIN lens, though this is not required. The SSID can include an imaging array optically coupled to the lens. The umbilical can include a conductive line, and the adaptor can be configured to support the lens and provide electrical communication between the SSID and conductive line. Alternatively, the adaptor can be a rigid adaptor configured to provide electrical communication between the SSID and the conductive line through a conductive path. The conductive path can be configured along multiple contiguous surfaces of the adaptor such that the SSID is electrically coupled to the conductive path at a first surface of the adaptor, and the conductive line is electrically coupled to the conductive path at a non-coplanar second surface of the adaptor.

In either embodiment, the conductive line can include conductive wires providing power, ground, clock signal, and output signal. The SSID can further include conductive pads electrically coupled to the imaging array, wherein the conductive pads provide electrical communication between the SSID and the adaptor. As before, the SSID can be a CCD, a CID, or a CMOS imaging device

With respect to the adaptor, the adaptor is typically smaller than 500 microns in length, width, and height, respectively. The adaptor can also be configured such that at least four separate electrical signals can pass therethrough at the same time without any of said signals substantially interfering with one another. Additionally, the adaptor can be electrically coupled to the SSID by a conductive material to form a rigid joint, as well as be electrically coupled to the conductive line by a conductive material to form a second rigid joint.

As described previously, an optical insert can be positioned between the imaging array of the SSID and the lens. However, in embodiments with an adaptor, the color filter insert can be integrated with the adaptor.

A utility guide configured for carrying utilities to the SSID, adaptor, or lens can also be present typical utilities include a light source or a fluid source, though many other utilities can be present, as is known by those skilled in the art. In one embodiment, a light or fluid source can be carried by the SSID, the adaptor, or the utility guide.

Another method of operating a microcamera can comprise the steps of (a) optically coupling a lens to an imaging array of an SSID, wherein the SSID is electrically coupled to a rigid adaptor; (b) defining a plurality of conductive paths, at least one of said conductive paths being configured along multiple non-coplanar surfaces of the adaptor; (c) powering the SSID through a first of the conductive paths; and (d) receiving signal from the SSID through a second of the conductive paths. In one embodiment, the lens is also supported by the adaptor.

An additional optional step can include the step of illuminating an area around the lens. In further detail, the step of optically coupling can include the step of directly attaching the lens to an imaging array of the SSID, or interposing an intermediate optical device between the lens and an imaging array of the SSID. The step of defining a plurality of conductive paths can also include defining at least four conductive paths.

A method of making an adaptor can comprise the steps of (a) applying a conductive material layer to an adaptor substrate; (b) applying a photoresist material layer to the conductive material layer; (c) developing a portion of the photoresist material layer, such that a first portion of the conductive material layer is exposed, and a second portion of the conductive material layer is protected; and (d) removing the first portion of the conductive material from the adaptor substrate.

Optional steps include the preliminary steps of applying a removable layer to a working substrate, followed by applying the adaptor substrate to the removable layer. Additionally, a step of removing the adaptor substrate from the removable layer after the first portion of the conductive material is removed from the adaptor substrate can also be carried out. In one embodiment, one can carry out the step of developing the photoresist a portion of the photoresist material is by applying heat from beneath the working substrate, as well as applying UV light to a portion of the photoresist material that protects the first portion of the conductive material. The photoresist material can be removed after the first portion of the conductive material is removed from the adaptor substrate.

As these adaptors are very small, e.g., less than 500 microns in length, width, and height, respectively, this method provides a unique method of forming these useful implements. If the adaptor is to be used to support a lens, the step of forming a hole through the adaptor substrate can also be carried out.

With each of the miniaturized imaging devices described herein, it is understood that any of various control or guiding devices can be used, such as tensioning wires and/or micromachined tubing.

Additional features and advantages of the invention will be apparent from the detailed description which follows, taken in conjunction with the accompanying drawings, which together illustrate, by way of example, features of the invention.

### BRIEF DESCRIPTION OF THE DRAWINGS

In the accompanying drawings:
FIG. 1 is a schematic illustration of an exemplary medical imaging system in accordance with principles of the invention;
FIG. 2 is a side view of an exemplary embodiment of the present invention, which is an enlarged view of device 14 of FIG. 1;
FIG. 3 is a top plan view of a utility guide that can be used in accordance with embodiments of the present invention;
FIG. 4 is a top plan view of an SSID that can be used in accordance with embodiments of the present invention;
FIG. 5 is a perspective view of an exemplary microcamera of the present invention that utilizes the utility guide of FIG. 3 and the SSID of FIG. 4;
FIG. 6 is an exploded perspective view of another exemplary embodiment of the present invention;
FIG. 7 is an assembled perspective view of the exemplary embodiment of FIG. 6;
FIG. 8 is a top plan view of an SSID integrated with utility apertures in accordance with another exemplary embodiment of the invention;
FIG. 9 is a perspective view of an exemplary microcamera of the present invention that utilizes the SSID of FIG. 8;
FIG. 10 is an exploded perspective view of another exemplary embodiment of the present invention;
FIG. 11 is an assembled perspective view of the exemplary embodiment of FIG. 10;
FIG. 12 is a top plan view of a plurality of SSIDs on a common substrate at a stage of the manufacturing process;
FIG. 13 is a top plan view of an alternative embodiment of a plurality of SSIDs on a common substrate at a stage of the manufacturing process;
FIGS. 14a to 14e provides perspective schematic representations of the manufacturing process in accordance with an embodiment of the present invention;
FIG. 15 is a cross sectional view of an exemplary embodiment of the invention;
FIG. 16 is a cross sectional view of another exemplary embodiment of the invention;
FIG. 17 is a cross sectional view of another exemplary embodiment of the invention in a first configuration;
FIG. 18 is a cross sectional view of the device of FIG. 8 in a second position view;
FIG. 19 is a perspective view of an SSID optically coupled to a coated GRIN lens;
FIG. 20 is a perspective view of an exemplary embodiment of an SSID and multiple GRIN lens positioned in an array;
FIG. 21 is a perspective view of another exemplary embodiment of an SSID and multiple GRIN lens positioned in an array;
FIG. 22 is a side view of multiple microcameras positioned in series along an umbilical as an array;
FIG. 23 is a schematic perspective illustration of a conventional wire bonding connection system consistent with the prior art;
FIG. 24 is an exploded schematic perspective illustration of an embodiment of the connector system in accordance with the present invention;
FIG. 25 is a schematic perspective illustration of an embodiment of the connector system in accordance with the present invention, wherein the SSID is movable for viewing various angles with respect to the umbilical;
FIG. 26 is a perspective view of another exemplary embodiment of the invention;
FIG. 27 is a top view of the device of FIG. 26;
FIG. 28 is a side view of the device of FIG. 26, rotated 90 degrees with respect to FIG. 27;
FIG. 29 is a perspective exploded view of another exemplary embodiment of the invention;
FIG. 30 is a perspective view of an adaptor incorporating conductive pathways in one embodiment;
FIG. 31 is a schematic side view illustration of a connection between two chips, such as SSIDs, including the adaptor of FIG. 30;
FIG. 32 is a perspective view of an adaptor incorporating conductive pathways in another embodiment;
FIG. 33 is a schematic side view illustration of a connection between two chips, such as SSIDs, including the adaptor of FIG. 32;
FIG. 34 is a schematic perspective illustration of a fabrication technique for modifying a connector body to form a pathway through an interior portion, thereby forming an adaptor, the adaptor being not yet cut free, but shown in outline form within a larger preform block of material;
FIG. 35 is a side crossectional view of a connector body as shown in FIG. 34 taken along line 2-2;
FIG. 36 is a schematic perspective illustration of another fabrication technique for forming an adaptor having conductive pathway(s) through an interior portion thereof, showing a preform block constructed in accordance with one embodiment, the connector body to be formed therefrom being shown in outline;
FIG. 37 is a perspective view of a connector body of FIG. 36 after machining from the block;
FIG. 38 is a perspective exploded view of another exemplary embodiment of the invention, wherein connector block also supports the lens;
FIG. 39 is a cross sectional exploded side view of the exemplary embodiment of FIG. 38;
FIG. 40 is a perspective exploded view of another exemplary embodiment of the invention;
FIG. 41 is a perspective assembled view of the exemplary embodiment of FIG. 40;
FIG. 42 is a cross sectional view of another exemplary embodiment of the invention;
FIG. 43 is a perspective view of an adaptor or connector block of FIG. 42;
FIGS. 44a to 44h provide cross-sectional representations of two adaptors at various preparative stages;
FIG. 45 is plan view along the optical axis of an exemplary color filter insert that can be used with imaging devices in accordance with principles of the invention;
FIG. 46 is a side view of the color filter insert of FIG. 45;
FIG. 47 is a second side view of the color filter insert of FIG. 45, taken at 90 degrees with respect to FIG. 46;
FIG. 48 is a schematic cross sectional representation of an example of a device similar to that shown in FIG. 40, having a color filter insert of FIG. 45 inserted therein;
FIG. 49 is a bottom perspective view of an exemplary adaptor or connector block integrated with a color filter insert;
FIG. 50 is a top perspective view of an exemplary adaptor or connector block integrated with a color filter insert;
FIG. 51 is a schematic side view representation of another exemplary embodiment having a color filter insert of FIG. 45 inserted therein; and
FIG. 52 is a schematic side view representation of another exemplary embodiment having a fiber optic inserted therein.

### DETAILED DESCRIPTION OF THE PREFERRED EMBODIMENT(S)

Reference will now be made to the exemplary embodiments illustrated in the drawings, and specific language will be used herein to describe the same. It will nevertheless be understood that no limitation of the scope of the invention is thereby intended. Alterations and further modifications of the inventive features illustrated herein, and additional applications of the principles of the inventions as illustrated herein, which would occur to one skilled in the relevant art and having possession of this disclosure, are to be considered within the scope of the invention.

It must be noted that, as used in this specification and the appended claims, singular forms of "a," "an," and "the" include plural referents unless the context clearly dictates otherwise.

An "SSID," "solid state imaging device," or "SSID chip" in the exemplary embodiments generally comprises a substrate carrying an imaging array or pixel array for gathering image data, and can further comprise conductive pads electrically coupled to the imaging array, which facilitates electrical communication therebetween. In one embodiment, the SSID can comprise a silicon or silicon-like substrate or amorphous silicon thin film transistors (TFT) having features typically manufactured therein. Features can include the imaging array, the conductive pads, metal traces, circuitry, etc. Other integrated circuit components can also be present for desired applications. However, it is not required that all of these components be present, as long as there is a means of gathering visual or photon data, and a means of sending that data to provide a visual image or image reconstruction. In some embodiments, the SSID can include utility apertures therethrough for carrying various utilities.

The term "umbilical" can include the collection of utilities that operate the SSID or the micro-camera as a whole. Typically, an umbilical includes a conductive line, such as electrical wire(s), for providing power, ground, clock signal, and output signal with respect to the SSID, though not all of these are strictly required. For example, ground can be provide by another means than through an umbilical wire, e.g., to a camera housing, etc. The umbilical can also include other utilities such as a light source, temperature sensors, force sensors, fluid irrigation or aspiration members, pressure sensors, fiber optics, microforceps, material retrieval tools, drug delivery devices, radiation emitting devices, laser diodes, electric cauterizers, and electric stimulators, for example. Other utilities will also be apparent to those skilled in the art and are thus comprehended by this disclosure.

"GRIN lens" or "graduated refractive index lens" refers to a specialized lens that has a refractive index that is varied radially from a center optical axis to the outer diameter of the lens. In one embodiment, such a lens can be configured in a cylindrical shape, with the optical axis extending from a first flat end to a second flat. Thus, because of the differing refractive index in a radial direction from the optical axis, a lens of this shape can simulate the affects of a more traditionally shaped lens. Though GRIN lenses are generally shown in the FIGS., other lenses can also be used with the present invention, as is known by those skilled in the art.

With these definitions in mind, reference will now be made to the accompanying drawings, which illustrate, by way of example, embodiments of the invention.

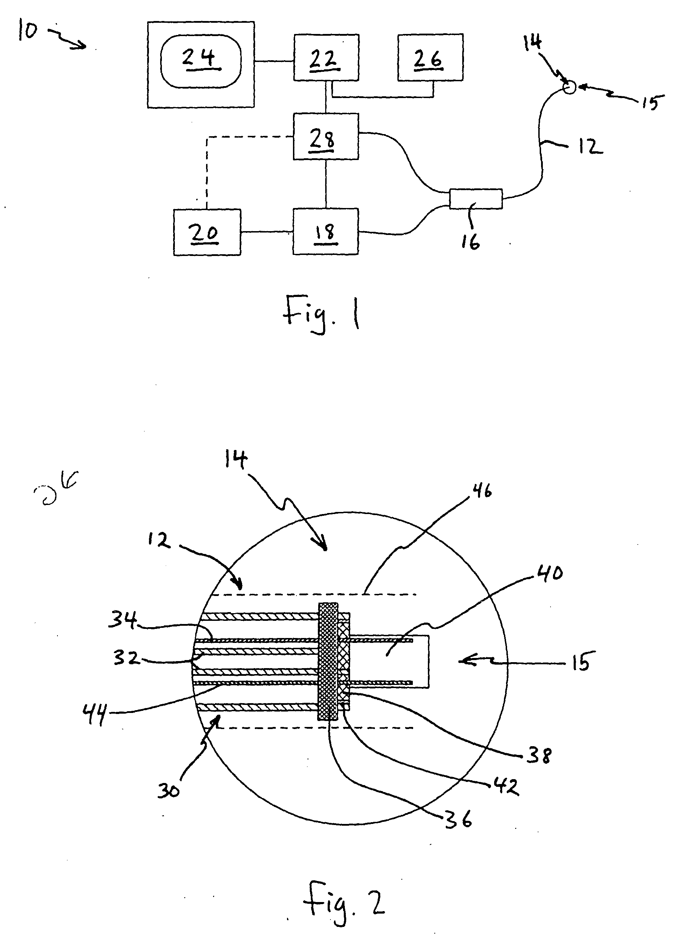

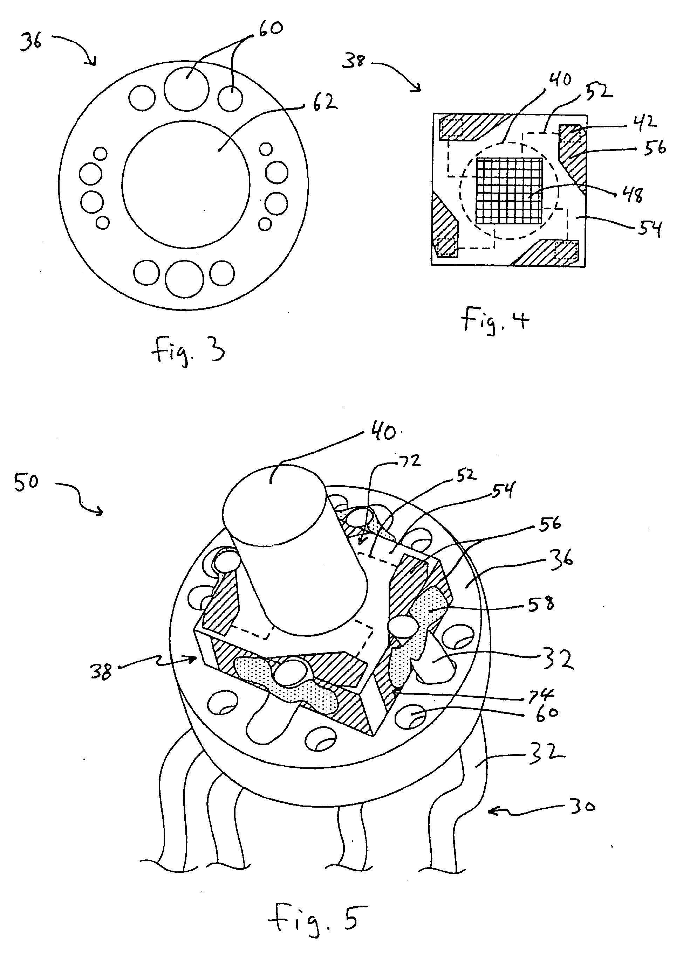

With reference to FIGS. 1 and 2, the invention is embodied in a medical imaging system 10, including a catheter 12 having an imaging capability by means of an imaging device, shown generally at 14, at a distal tip 15 of the catheter. The system further includes a fitting 16 enabling an imaging fluid, such as a clear saline solution, to be dispensed to the distal tip portion of the catheter from a reservoir 18 to displace body fluids as needed to provide a clearer image. A pump 20 is provided, and is manually actuated by a medical practitioner performing a medical imaging procedure, or can be automated and electronically controlled so as to dispense fluid on demand according to control signals from the practitioner, sensors, or according to software commands.

A processor 22, such as an appropriately programmed computer, is provided to control the imaging system 10 and create an image of anatomy adjacent the distal tip portion 15, within a patient (not shown), displayable on a monitor 24, and storable in a data storage device 26. An interface 28 is provided which supplies power to the imaging device 14 and feeds a digital image signal to the processor based on a signal received from the imaging device via an electrical umbilical 30, including conductive wires 32, a fluid dispenser 34, and a light source 44, through the catheter 12. The interface can also be configured to control the pump 20 based on control signals from the processor or a medical practitioner performing an imaging procedure.

With more specific reference to FIG. 2, the imaging device 14 at the distal tip 15 can include a utility guide 36 for supporting or carrying the umbilical 30, which can include electrical wires 32, fluid dispenser 34, and a light source 44. Other components that can be carried by the utility guide can include, temperature sensors, force sensors, fluid irrigation or aspiration members, pressure sensors, fiber optics, microforceps, material retrieval tools, drug delivery devices, radiation emitting devices, laser diodes, electric cauterizers, and electric stimulators. The utility guide can also carry an SSID or solid state imaging device 38 that includes an imaging array (not shown) and conductive pads 42 for coupling the electrical wires to the SSID. Though the utility guide and the SSID are shown as two separate units, it is understood that a single integrated unit can also be fabricated. The light source shown is a fiber optic carried by the utility guide. However, other light sources can be used, such as those carried by the SSID. For example, the SSID can also include light-emitting diodes (LEDs) configured to illuminate the area immediately adjacent the distal tip portion. With the SSID in this configuration, a GRIN lens 40 is shown optically coupled to the imaging array of the SSID.

If a GRIN lens 40 is used, the lens can be substantially cylindrical in shape. In one embodiment, the GRIN lens can have a first flat end for receiving light, a second flat end for passing the light to the imaging array, and an outer curved surface surrounded by an opaque coating or sleeve member to prevent unwanted light from entering the GRIN lens. The GRIN lens can be optically coupled to the imaging array by direct contact between the second flat end and the imaging array of the SSID 38. Such direct contact can include an optically transparent or translucent bonding material at the interface between the second flat end and the imaging array. Alternatively, the GRIN lens can be optically coupled to the imaging array of the SSID through an intermediate optical device, such as a fiber optic or a color filter, or any shape optical lens such as a prism or wide angle lens.

The catheter 12 can be configured to be bendable and flexible so as to be steerable within a patient's anatomy and to minimize trauma. For example, the catheter can comprise a micromachined tube 46 at the distal tip portion, and cut-out portions (not shown) can allow for increased flexibility of the tube, and also allow for outflow of an imaging fluid to displace body fluids in the immediate area of the distal tip portion for more clear imaging. Such a micromachined tube can also allow bending to facilitate guiding the catheter to a desired location by selection of desired pathways as the catheter is advanced.

The catheter 12 can comprise an internal tensionable wire adjacent one side of the distal tip portion, which when tensioned, causes the distal tip portion 15 to deflect as is known in the art. A combination of deflection and rotation of the distal tip portion of the catheter provides steerability of the device. Another alternative for directability of the distal tip portion is to provide a micro-actuator (not shown) such as an element which expands or contracts upon application of an electrical current signal. Such an element can be substituted for the tension wire, for example.

As will also be appreciated, while the system is illustrated by the exemplary embodiment of a medical imaging system, these arrangements could be used in other devices, such as visual sensors in other devices, surveillance apparatus, and in other applications where a very small imaging device can be useful.

Moreover, with reference to all of the embodiments described herein, the device contemplated can be very small in size, and accordingly the imaging array of the SSID can have a lower pixel count than would otherwise be desirable. As technology advances, pixel size can be reduced, thereby providing clearer images and data. However, when using a lower number of pixels in an imaging array, the resolution of the image provided by the device can be enhanced through software in processing image data received from the SSID. The processor showing in FIG. 1, can be appropriately programmed to further resolve a scanned image from an array of an SSID, for example, based on information received as the SSID is moved slightly, such as from vibration controlled vibration. The processor can analyze how such image data from the imaging array is altered due to the vibration, and can refine the image based on this information.

Referring to FIG. 3, an embodiment of a utility guide 36 is shown. The utility guide includes a plurality of utility apertures 60 and a central aperture 62. The utility guide can be of any material that will not interfere with the function of the SSID (not shown). For example, the utility guide can be of silicon that has been deep reactive ion etched to form the desired structure. Alternatively, a polymeric material such as SU-8 polymer material manufactured by IBM, Foturan which is a photosensitive glass by Coming, or polymethyl methacrylate (PMMA) molded by Lithographie Galvanoformung Abformung (LIGA) can also be used for forming such a structure. The utility guide has the dual function of carrying the SSID, as well as carrying the utilities provided by the umbilical.

FIG. 4 depicts an embodiment of an SSID 38 that can be used in accordance with embodiments of the present invention. The SSID includes an imaging array 48 electrically coupled to conductive pads 42 by an electrical connection 52. All of these features 48, 42, 52 are manufactured into a substrate 54 when the SSID is prepared. Additionally, a conductive strip or metal trace 56 is present on the SSID, providing electrical communication between the conductive pads and respective side surfaces (not shown) of the SSID. The positioning of a GRIN lens 40 with respect to the imaging array is also shown.

FIG. 5 depicts an assembled microcamera 50 that utilizes the utility guide 36 of FIG. 3 and the SSID 38 of FIG. 4. The utility guide includes utility apertures 60 and a central aperture (not shown). The SSID is carried by the utility guide, and can be bound to the utility guide by an epoxy material, anodic bonding, or eutectic bonding. Alternatively, the utility guide can be micromachined by a deep reactive ion etch (DRIE) process by utilizing the SSID as a staring material, and thus, removing the additional step of connecting the utility guide to SSID. The SSID includes conductive strip 56 that provides conductivity from a top surface 72 of the SSID to a side surface 74 of the SSID. Thus, conductive wires 32 of the umbilical 30 can be carried by a utility aperture of the utility guide, and attached to the conductive strip by a bonding joint 58, such as a solder joint, at the side surface. The solder joint can be of a conductive bonding material, such as silver or gold filled epoxy, silver or gold solder, or another suitable adhesive or eutectic conductive substance. Alternatively, the connection between conductive strip and the conductive wires can be through wire bonding, solder bumping, eutectic bonding, electroplating, or conductive epoxy. However, with this configuration, a direct bonding joint having no wire bonding between the conductive strips and the conductive wires can be preferred, as good steerability can be achieved with less risk of breaking electrical bonding. As the conductive strip is electrically coupled to the conductive pads (not shown), and as the conductive pads are electrically coupled to the imaging array (not shown) by an electrical connection 52, electrical coupling between the imaging array and the conductive wires of the umbilical is effectuated.

The SSID can be any solid state imaging device, such as a CCD, a CID, or a CMOS imaging device. The substrate 54 of the SSID 38 can comprise a silicon or silicon-like material or can be an amorphous silicon thin film transistors (TFT) having features typically manufactured therein. Features can include the imaging array (not shown), the conductive pads (not shown), and conductive strips or metal traces 56 (which are typically applied topically after SSID foundry manufacture). Other integrated circuit components can also be present for desired applications, such as light emitting diodes (LEDs) (not shown) for providing light to areas around the lens. As the above described component are exemplary, it is not required that all of these components be present, as long as there is a visual or photon data gathering means, and some means of converting that data to a visual image or a visual reconstruction.

The conductive wires 32, can provide the dual function of guiding the direction the SSID, such as by tensioning, as well as provide electrical contact between any power source/signal processors (not shown) and the SSID, though this dual functionality is not required. Alternatively, steering can be by a micromachined tube, as is known in the art. An example of such micromachined tubing is described in U.S. Patent No. 6,428,489, which is incorporated herein by reference. In further detail with respect to the umbilical, the conductive wires of the umbilical can provide power, ground, clock signal or control, and output signal to the SSID. Further, the electrical umbilical 30, including conductive wires, can comprise an insulator coating portion around each individual utility, and/or around the umbilical as a whole.

The lens 40, SSID 38, and utility guide 36 of the microcamera can be fused together or bonded together as desired. For example an epoxy, such as a UV cure epoxy, can be used to bond the lens to the imaging array 48 of the SSID. Likewise, an epoxy can also be used to bond the utility guide to the SSID. However, with the use of such epoxy, care should be taken not use a UV light at an intensity that would damage the SSID or other structures of the device.

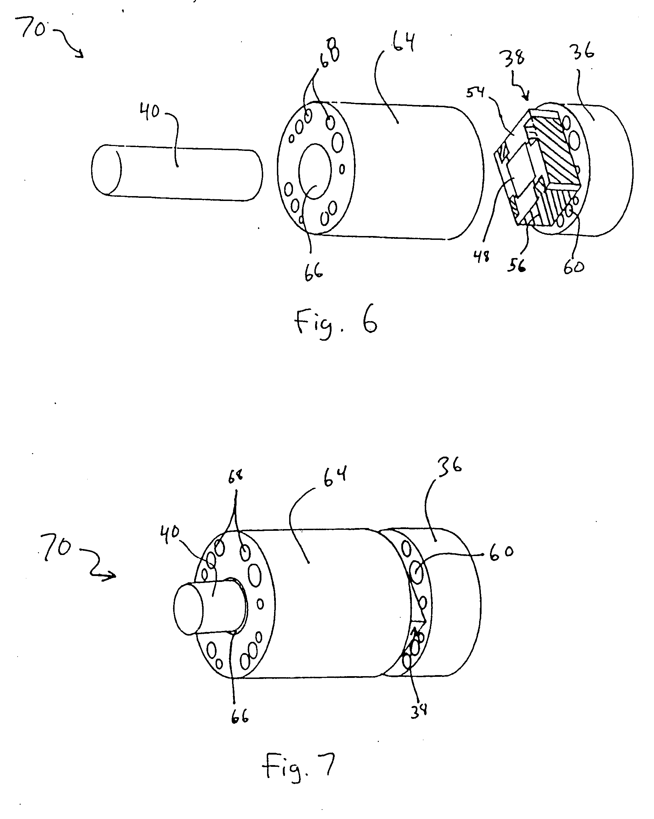

FIGS. 6 and 7 depict an alternative microcamera assembly 70 wherein the lens 40 is held in place by a lens holder 64. The lens holder can include utility apertures 68 for carrying or guiding utilities, such as light or fluid aspirators/dispensers. The lens holder also includes a lens aperture 66 for supporting the lens. If the lens is a GRIN lens, the lens can be coated with an opaque coating or sleeve on or around the curved surface to prevent light from entering the lens at other than the flat surface that is most distal with respect to the SSID. The lens holder can act, in part, as the opaque sleeve that prevents unwanted light from entering the side, provide the lens holder is fabricated from an opaque material.

The SSID 38 and utility guide 36 are configured similarly as that described with respect to FIG. 5. Specifically, the SSID includes a substrate 54 carrying an imaging array 48 and conductive strips or metal traces 56. The utility guide 36 includes utility apertures 60 that are aligned with the utility apertures 68 of the lens holder 64. Utilities, such as conductive wires (not shown), that are used to power and carry signal with respect to the SSID, need not be carried by the utility apertures of the lens holder, as such conductive wires usually terminate at the SSID. The utility apertures of the lens holder are primarily for carrying utilities that are used at or near the lens, e.g., fluid dispensers/aspirators, light utilities, forceps, and the like.

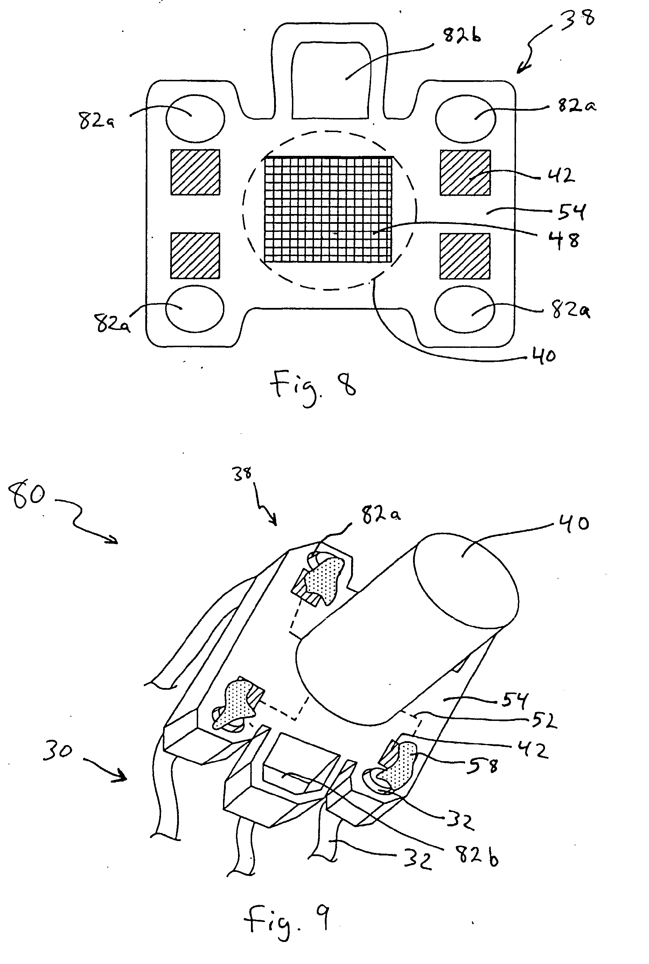

Turning now to FIG. 8, an alternative SSID 38 that is integrated with utility apertures 82a, 82b is shown. The SSID includes a substrate 54 that carries conductive pads 42 and an imaging array 48 fabricated therein. As the SSID includes five utility apertures 82a, 82b, various utilities can be carried by the SSID device without the use of a separate utility guide as described with respect to FIG. 5. Lens 40 is shown as it can be positioned with respect to the imaging array.

Fig. 9 depicts a system 80 that utilizes the SSID 38 of FIG. 8. In this embodiment, the SSID includes a substrate 54, which carries an imaging array (not shown), conductive pads 42, and electrical connections 52 between the imaging array and the conductive pads. The SSID is electrically coupled to an umbilical 30 at the conductive pads 42. Specifically, conductive wires 32 of the umbilical are carried by four utility apertures 82a and electrically coupled to the conductive pads 42 by respective solder joints 58. The four conductive wires can be used to provide power, ground, clock signal to the SSID, as well as image signal from the SSID to a remote processor/monitor device (not shown). Only four of the five apertures are used to carry the conductive wires. The larger fifth aperture 82b can carry other utilities such as light sources, fluid aspirators and/or dispensers, temperature sensors, force sensors, pressure sensors, fiber optics, microforceps, material retrieval tools, drug delivery devices, radiation emitting devices, laser diodes, electric cauterizers, and electric stimulators, and the like. The fifth aperture 82b can also carry multiple utility devices, or additional apertures (not shown) can be included in the SSID for carrying separate utilities. Lens 40 can be positioned with respect to the SSID to be optically coupled to the imaging array. All of the disclosure related to the lens, SSID, umbilical, apertures, and the like, described in other embodiments, such as in FIG. 5, can also be applicable to this embodiment as well.

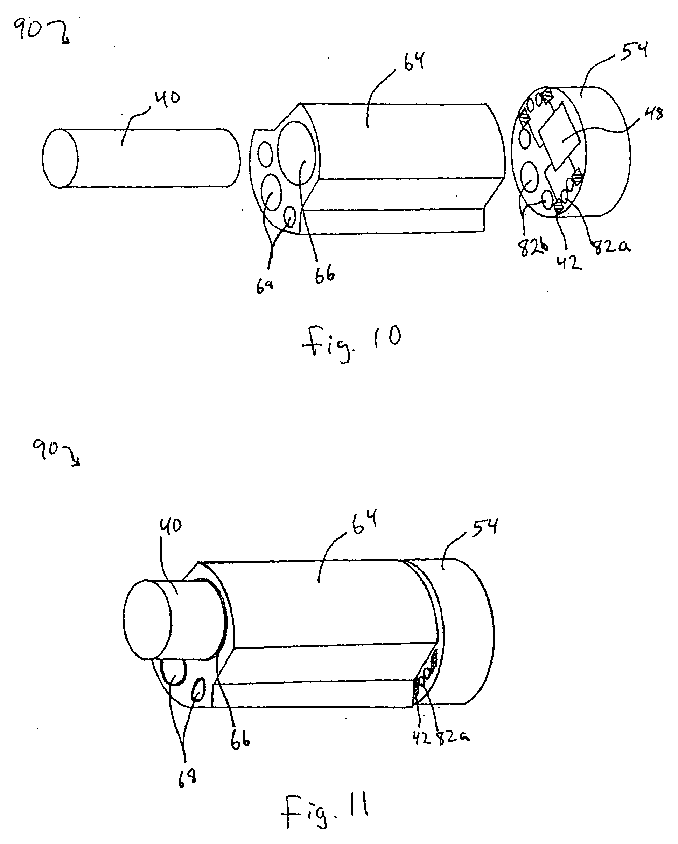

FIGS. 10 and 11 depict an alternative microcamera assembly 90 wherein the lens 40 is held in place by a lens holder 64. As with FIGS. 6 and 7, the lens holder can include utility apertures 68 for carrying or guiding utilities. The lens holder can also include a lens aperture 66 for supporting the lens. Like the SSID shown in FIG. 8, the SSID includes conductive pads 42, utility apertures 82a, 82b, and an imaging array 48, all as an integrated unit. Utilities, such as conductive wires (not shown), that are used to power and carry signal with respect to the SSID, need not be carried by the utility apertures of the lens holder. The utility apertures of the lens holder are primarily for carrying utilities that are used at or near the lens. When the lens holder is in place with respect to the SSID, as shown in FIG. 11, utility apertures 82a and conductive pads 42 are exposed, thereby providing a means for carrying conductive wires (not shown) for attachment to the conductive pads, without interference from the lens holder.

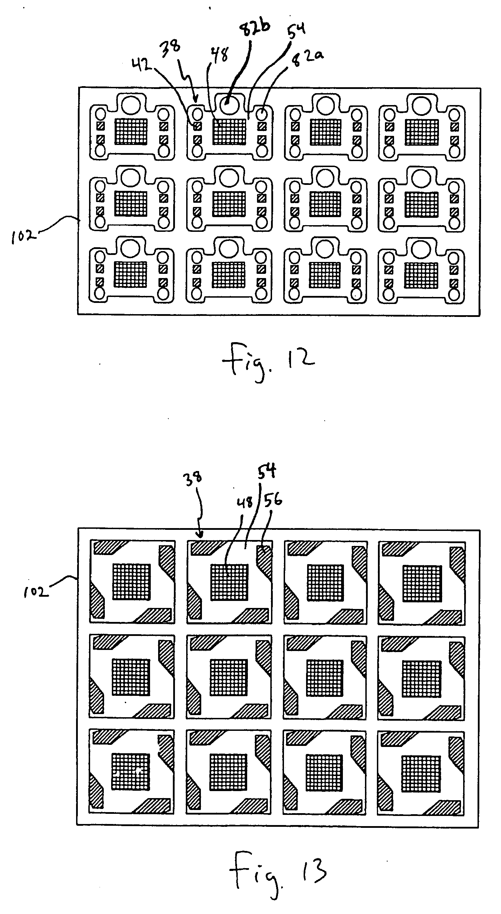

FIGS. 12 and 13 provide schematic representations of a preparative step in creating a plurality of SSIDs 38 on a common substrate 102. FIG. 12 depicts the mass preparation of the SSID of FIG. 8, and FIG. 13 depicts the mass preparation of the SSID of FIG. 4. Both preparative schemes provide a means of preparing SSIDs including a substrate 54 having an imaging array 48 and conductive pads 42 fabricated thereon. FIG. 12 further includes apertures 82a, 82b configured in the SSID itself. FIG. 13 does not shown the conductive pads as they are not viewable due to the presence of conductive strips 56.

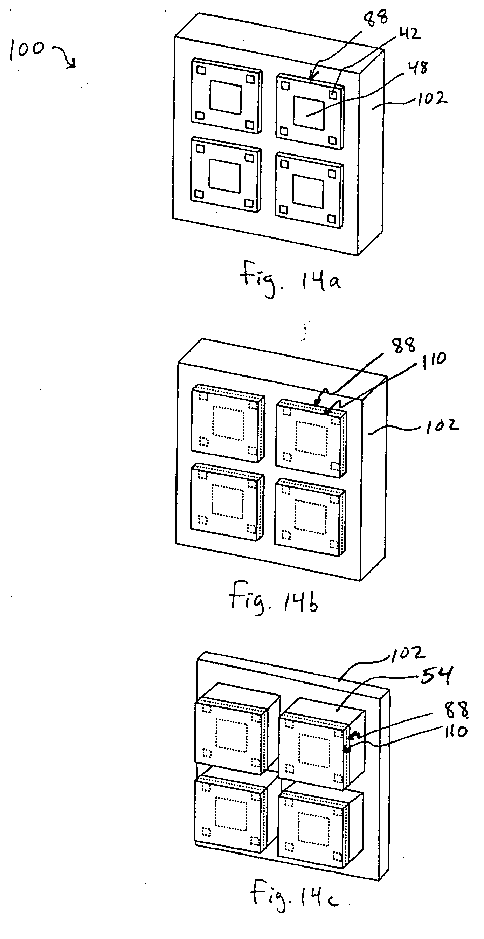

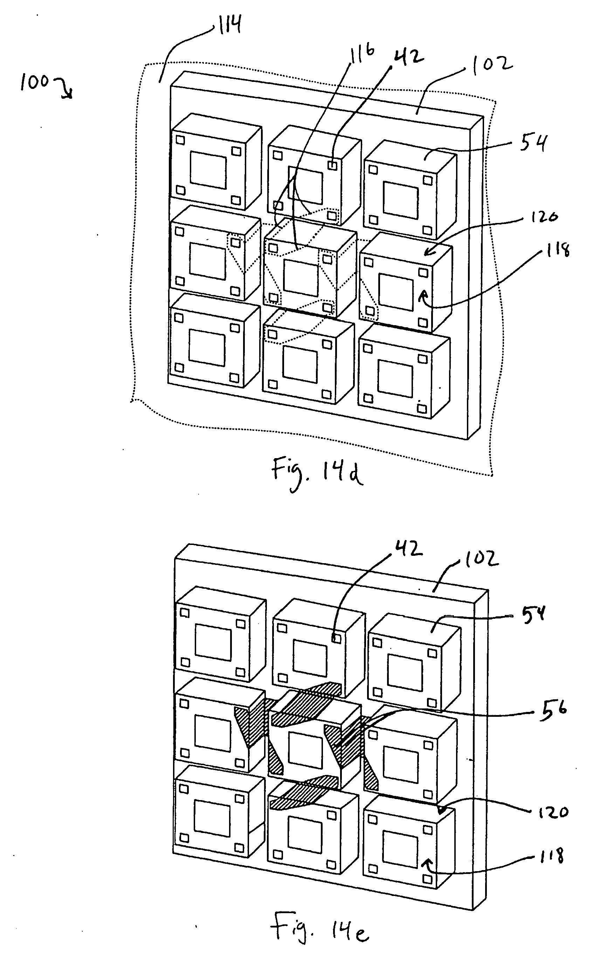

Turning now to the specifics of how an SSID can be manufactured, FIGS. 14a to 14e depict one possible embodiment. This process is described as exemplary, as one SSID can be made individually, or alternatively, many more that the four SSIDs depicted can be manufactured together, either by the process described below or by other known chip manufacturing processes. Preliminarily, a VLSI design can be sent to a manufacturing CMOS foundary, wherein a plurality of "chips" or feature groupings 88 can be manufactured on a single silicon manufacture substrate 102. The individual feature groupings on the manufacture substrate can then be processed and separated to form individual SSIDs.

FIG. 14a depicts a manufacture substrate 102 carrying a plurality of feature grouping 88 (each feature grouping individually becoming individual SSIDs). The individual feature groupings include an imaging array 48, conductive pads 42, and other circuitry components (not shown). Once received from the foundary, typically, the substrate as a whole is coated with oxy-nitride, silicon dioxide, or the like. Reactive ion etching (RIB) can be carried out to remove this protective coating and all of the other thin film layers, so that it is left with a bare silicon top surface.

Referring to FIG. 14b, each individual feature grouping 88 can be coated with a photoresist material 110 to protect the area of interest from subsequent separation steps. In one embodiment, the photoresist can be applied at a thickness of about 10 microns. Referring to FIG. 14c, the unprotected areas, i.e., areas between each individual feature grouping, can then be etched away by processes known in the art, such as deep reactive ion etching processes. Etching can be carried out until manufacture substrate 102 becomes thinned, and the SSID substrate 54 becomes exposed (which is of the same material as the manufacture substrate). An exemplary thickness for the thinned manufacture substrate is about 50 microns.

FIGS. 14d and 14e depict three by three arrays (rather than two by two arrays shown in FIGS. 14a to 14c) of SSIDs in order to show how a single SSID is masked and coated with conductive strips. Masking and metallizing of only one complete SSID (in the middle of the array) is shown, though processing would typically occur on all SSIDs present on the array. Additionally, before masking, the photoresist material is removed, and then 1.5 microns of silicon dioxide (not shown) is deposited on the SSID array and manufacture substrate 102 using a Plasma Enhanced Chemical Vapor Deposition process. Reactive ion etching (RIE) can then be used to remove the silicon dioxide from the conductive pads (not shown). Once the etching is complete, the conductive pads are uniquely exposed, and the array of SSIDs on the thinned manufacture substrate is prepared to be masked.

FIG. 14d depicts a photomask 114 having a plurality of cutouts 116. The photomask is applied as a three-dimensional structure such that a top surface 118 and a side surface 120 of each SSID can be partially exposed at desired areas only. In other words, the photomask is applied onto the three-dimensional array of SSIDs, and is patterned such that portions of the side surfaces and top surface of each SSID can be selectively metallized, including at the location of the exposed conductive pads. Once masked, metallization can be accomplished by a sputtering process such that exposed surfaces of each individual SSID are coated. For example, sputtering of Ti/Pt via a lift off process can be used for metallization.

Resulting from this process, and as depicted in FIG. 14e, each of four side surfaces of each SSID is transformed to include conductive strips 56 that electrically couples a side surface of the SSID to a top surface of the SSID (where the conductive pads are present for controlling the imaging array). Reactive ion etching (RIE) can then be used again to remove the silicon manufacture substrate 102, thereby separating each individual SSID from the manufacture substrate.

Other SSIDs in accordance with embodiments of the present invention can also be made using similar procedures. For example, the SSID shown in FIG. 8 can be made similarly as that described above, except that the three-dimensional masking step shown in FIG. 14d is not necessary, as there is no "around the corner" metal trace present. Additionally, an added step of boring utility apertures through the SSID can be carried out by drilling, masking (as in FIG. 14b) to enable etching away of the apertures, or some other known procedure.

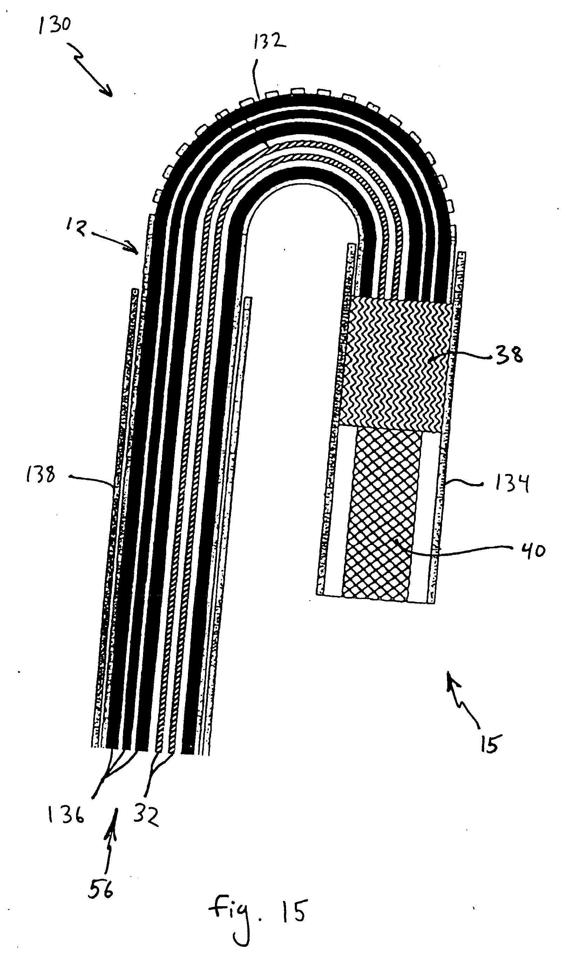

With reference to FIG. 15, another system is shown generally at 130. In this embodiment, the distal tip 15 of the catheter 12 is shown. An outer sleeve 138 is provided over the outside of the catheter in telescoping fashion. The catheter can be withdrawn into the sleeve at will by differential movement at a proximal end (not shown) of the device. An outer tubing of the catheter can be micromachined to provide a pre-disposition to bend adjacent the SSID 38, for example by micomachining the tubing to provide openings 132 on one side of the tubing and bending the tubing to give it a curved configuration doubling back on itself as shown in the figure. The tip can be directed as desired by pulling the curved portion of the catheter partially, or completely, back into the outer sleeve. In one embodiment, the micro-machined tubing is formed of super-elastic material with embedded shape memory capability, such as NiTi alloy so that this can be done repeatedly without the material taking a set. A further outer sleeve 134 is provided adjacent the SSID and GRIN lens 40 to support this structure. A conductive strip 56, including conductive wires 32, can be provided, as described previously.

In another embodiment, tensioning wires 136 can be provided in a lumen within the catheter adjacent a large radius, or outer portion of the catheter 12, which enables directing the tip 15 by providing a tension force tending to straighten out this portion of the catheter. The tension wire is attached to the SSID 38 and extends back through the catheter to a proximal portion where it can be manipulated by a practitioner doing the imaging procedure. The catheter can also include provision for supplying imaging fluid, light, or other utilities, as discussed above.

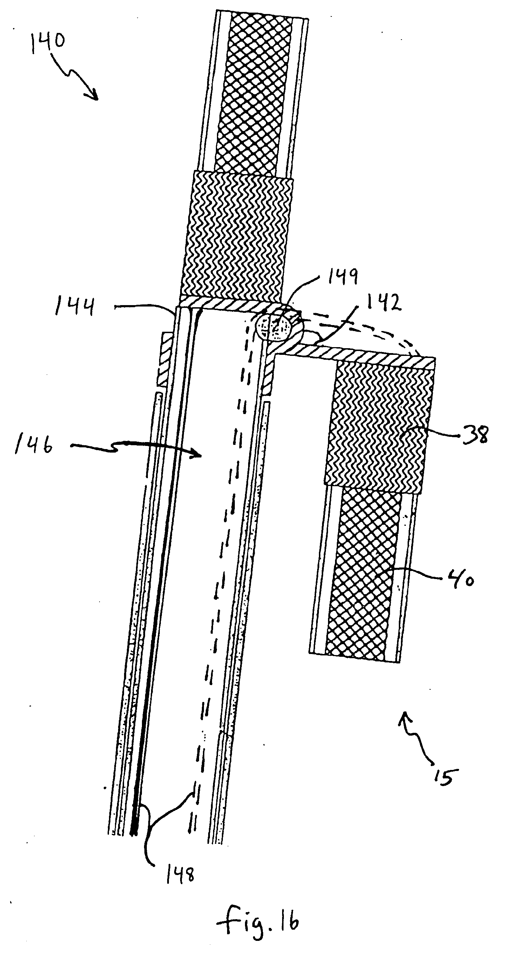

With reference to FIG. 16, a system shown generally at 140, can comprise an SSID 38 mounted on a hinge 142 formed of super-elastic material with embedded shape memory capability. The hinge is connected to a tube 144 defining an inner lumen 146 of the catheter 12. Tensioning wires 148 are attached to the hinge, and allows the SSID to be directed from a first direction aimed back along the longitudinal axis of the catheter, through 180 degrees, to a second position aiming distally away from the catheter in a direction substantially coincident with the longitudinal axis. This, in combination with rotation of the catheter, allows for directability of the tip. A rounded guide 149 is attached to a distal portion of the tube to provide a radius for the tensioning wires and the hinge so that they do not kink, but deform elastically as shown. Conductive wires (not shown) can be present as describe previously.

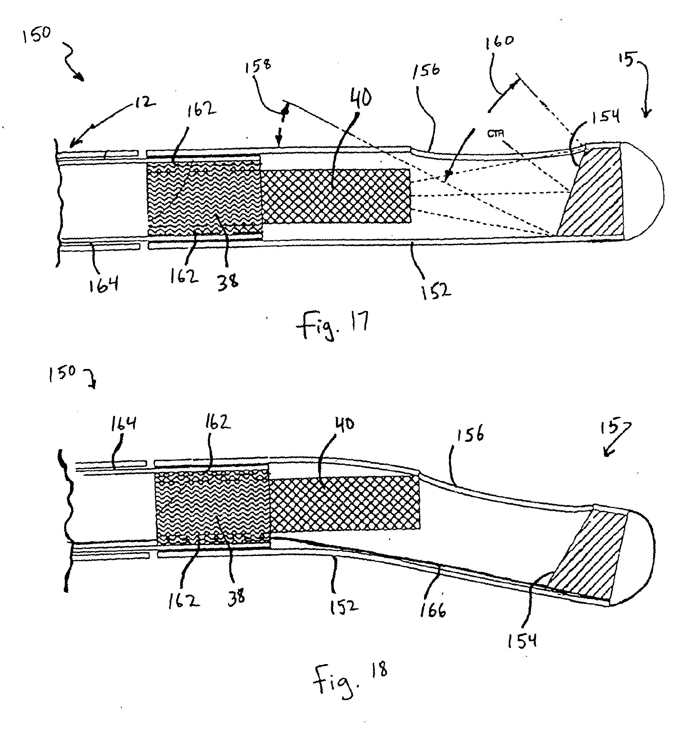

Continuing now with reference to FIGS. 17 and 18, an alternative system is shown generally at 150. As shown, control means for directing the catheter 12 and/or directing the field of view of the SSID 38 at the distal tip portion 15 of the catheter is illustrated. A deformable outer sleeve 152 comprising a mirror element 154 at a distal end is provided. An opening 156 adjacent the mirror element and the GRIN lens 40 enables appropriate imaging.

In one configuration state, shown in FIG. 17, the angled surface of the mirror allows a view rearwardly and to the side of the catheter at an angle 158 of about 25 to 50 degrees with respect to a longitudinal axis of the catheter. A field of view 160 based on the configuration and spacing, and angular relationships between the elements can comprise between about 15 and 25 degrees. The SSID can comprise one or more lumens 162 for conveying imaging fluid to the distal tip portion of the catheter, or to carry power to the imaging array (not shown) of the SSID. As will be appreciated, imaging fluid could also be conveyed to the imaging site via another lumen 164 or a guiding catheter, or a completely separate catheter (not shown).

In another configuration state, shown in FIG. 18, the deformable outer sleeve 152 is bent, enabling direct viewing forwardly through the opening 156. Also, views rearwardly at various angles can be obtained by causing more or less deflection of the deformable outer sleeve 152. Attached to the tube adjacent one side (a bottom side in FIG. 18), a tension wire 166 deflects the deformable outer sleeve as tension is applied. Another way for deforming the sleeve is to form it from a NiTi alloy, which changes shape from a first configuration shown in FIG. 17 to a second configuration in FIG. 18 via change of temperature such as can be affected by introduction of imaging fluid of a different temperature, or by running an electrical current therethrough. In the latter two embodiments, the tip has essentially two states, deformed and undeformed.

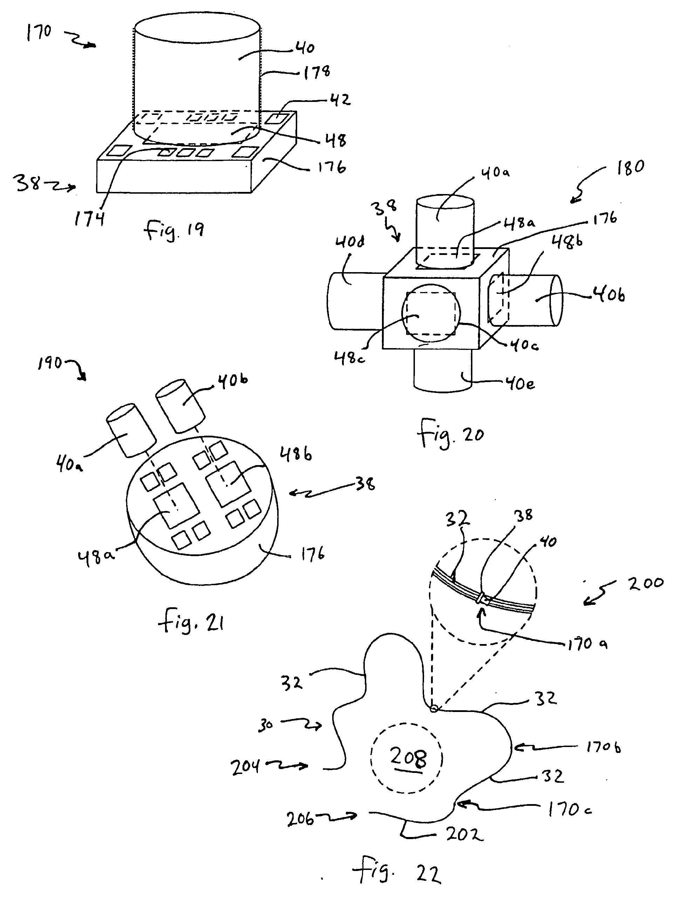

Referring now to FIG. 19, a system, indicated generally at 170, includes a GRIN lens 40 and an SSID 38. The SSID can comprise a silicon or silicon-like substrate or amorphous silicon thin film transistors (TFT) 176 having features typically manufactured therein. Features including the imaging array 48, the conductive pads 42, metal traces (not shown), circuitry (not shown), etc., can be fabricated therein. With respect to the conductive pads, the connection between conductive pads and a conductive line of an umbilical (not shown) can be through soldering, wire bonding, solder bumping, eutectic bonding, electroplating, and conductive epoxy. However, a direct solder joint having no wire bonding between the electrical umbilical and the conductive pads can be preferred as providing good steerability can be achieved with less risk of breaking electrical bonding. In one embodiment, the conductive line of the umbilical can provide power, ground, clock signal, and output signal with respect to the SSID. Other integrated circuit components can also be present for desired applications, such as light emitting diodes (LEDs) 174, for providing light to areas around the GRIN lens.

It is not required that all of these components be present, as long as there is a visual data gathering and sending image device present, and some means provided to connect the data gathering and sending device to a visual data signal processor. Other components, such as the umbilical, housing, adaptors, utility guides, and the like, can also be present, though they are not shown in FIG. 19. The SSID 38 can be any solid state imaging device, such as a CCD, a CID, or a CMOS imaging device. Also shown, the GRIN lens 40 is coated with an opaque coating 178 on the curved surface to prevent light from entering the lens at other than the flat surface that is most distal with respect to the SSID.

FIG. 20 depicts an alternative system 180 that includes multiple imaging arrays 48a, 48b, 48c on a common SSID 38. Though only three imaging arrays are shown in this perspective view, five imaging arrays are present in this embodiment (i.e., one on each side of five sides the substrate 176, with the back side of the substrate providing a surface for umbilical connection). Each imaging array is respectively optically coupled to a GRIN lens 40a, 40b, 40c, 40d, 40e. As can be appreciated, this is but one configuration where multiple imaging arrays with multiple GRIN lenses can be used. Fewer or more imaging arrays can be used in other similar embodiments, and/or can be part of multiple SSIDs. Umbilical connections are not shown, though it is understood that an umbilical can be present to operate the SSID and its multiple imaging arrays (either by signal splitting or by the use of separate power and/or signal sources).

FIG. 21 depicts a system, shown generally at 190, which can provide stereoscopic imaging. Specifically, multiple imaging arrays 48a, 48b, are shown on a common SSID 38 in a coplanar arrangement. A pair of GRIN lenses 40a, 40b are shown as they would be optically coupled to two imaging arrays, respectively. Other than the imaging array, other features are also present in the SSID, including conductive pads 42 for providing an electrical connection to an umbilical (not shown).

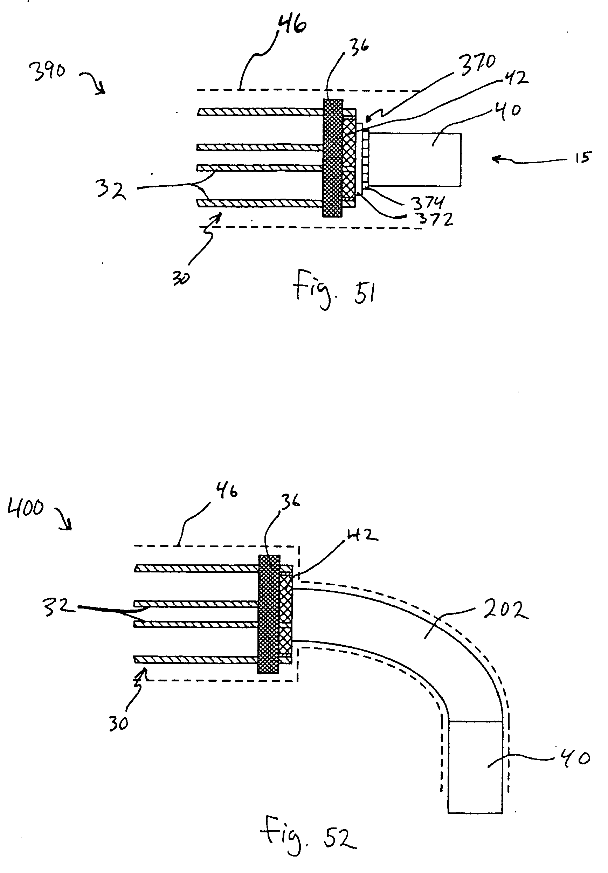

Referring now to FIG. 22, a system 200 includes multiple microcameras 170a, 170b, 170c positioned along an umbilical 30, which are attached to conductive wires 32 of the umbilical. The umbilical includes a proximal end 204, which can be coupled to a processor/monitor (not shown) for viewing, and a distal end 206. Each microcamera includes an SSID 38 and a GRIN lens 40. In the embodiment shown, the microcamera 170c that is closest to a terminal end is optically coupled to a fiber optic line 202, which can include a GRIN lens at a terminal end of the fiber optic line, as shown in FIG. 52 below. However, the microcamera closest to the terminal end can actually be at a distal tip of the catheter. To illustrate an approximation of the size of the microcameras of the present invention, structure 208 is shown, which is approximately the size of a small coin, such as a United States dime.

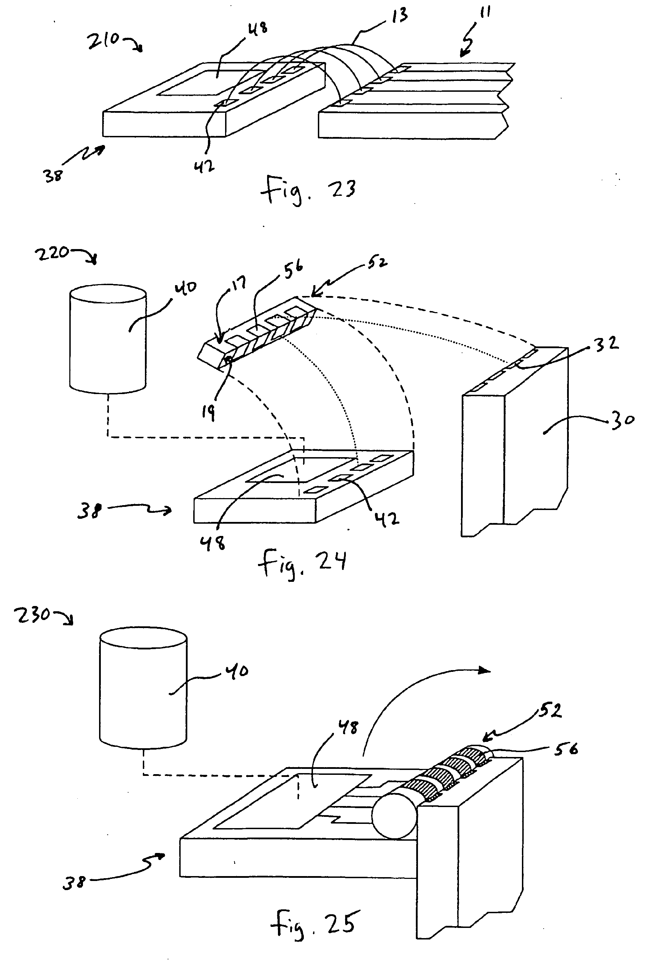

With reference to FIG. 23, the conventional way of providing electrical connection between a conductive pad 42 on an SSID 38 and another structure 11 is by means of wires 13 soldered or bonded thereto, as shown in system 210. This connection method is known as wire bonding. The connection thus made is inherently fragile and susceptible to damage, particularly if the SSID is able to move with respect to the other structure. Such movement induces flexing and stress on the delicate wires and could cause breakage, or an undesired short between two or more wires.

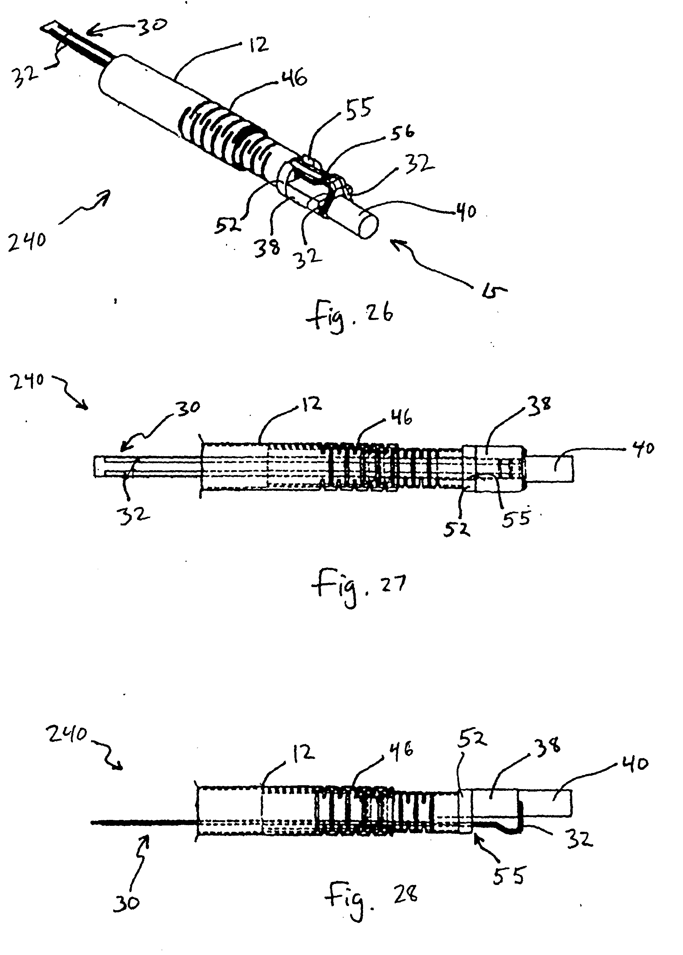

With reference to FIG. 24, in contrast, a system, shown generally at 220, includes a connector block or adaptor 52 which provides for mechanical attachment as well as electrical connection. In other words, a connector body or bulk of the adaptor provides both stabilization and bonding between the SSID 38 and an umbilical 30, as well as an electrical connection.

The adaptor 52 comprises, in the exemplary embodiment shown, a block of nonconductive substrate material incorporating conductive strips 56 which bridge around a corner between a first surface 17 configured for bonding with an umbilical 30, and a second surface 19 configured for bonding with the SSID 38. The conductive strips are configured to be in alignment with conductive wires 32 on the umbilical and conductive pads 42 on the SSID. A lens 40 is shown as it would be optically coupled to the SSID. Though the adaptor is shown as bonded to an umbilical, other structures can also be bonded to the SSID by the adaptor, such as another chip, a board or other substrate upon which the chip is mounted, a conductive strip, a connector further coupled to an additional structure such as a wire strip or cable, a flexible strip having conductors thereon, etc.

With reference to FIG. 25, with system 230, instead of providing a rectilinear adaptor 52, a circular cross-section or cylindrical adaptor can be provided. Good contact between the adaptor, the conductive pads (not shown) on the SSID 38, and conductive strip 56 is provided by applying pressure and deforming the conductors slightly due to the round shape of the connector body being pressed against the flat surfaces of the other structure. An epoxy, or other adhesive is used to bond the assembly together and fills in the gaps around the cylindrical body. Again, the SSID includes an imaging array 48, and a lens 40 can be configured to be optically coupled to the imaging array.

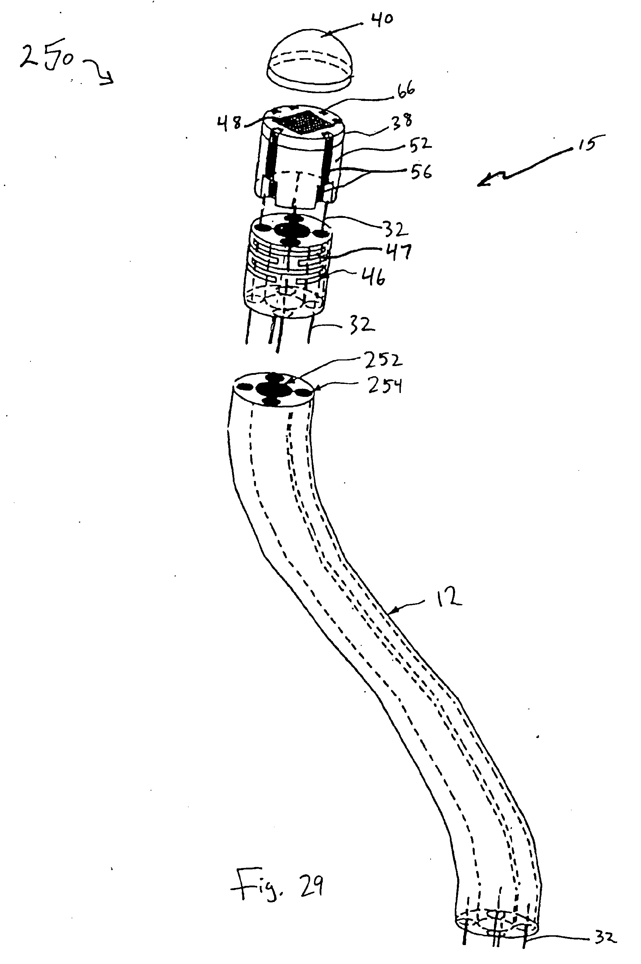

Turning now to FIGS. 26 to 28, another embodiment of the invention is implemented as shown in system 240, wherein a distal tip portion 15 of a catheter 12 includes lens 40 optically coupled to an SSID 38. Here, the SSID is also electrically bonded to an adaptor 52. The adaptor is carried by micromachined tubing segment 46, and is configured to fit within it at a distal end of the tubing segment. The adaptor has a channel 55 formed therein which allows passage of a conductive strip or wires 32 of an umbilical 30. The micromachined tubing segment itself is configured to provide telescoping action. This allows the distal tip portion of the catheter to be assembled and then connected easily to the remainder of the catheter. The conductive strip can comprise a ribbon formed of a non-conductive material, such as KAPTON, with conductive traces overlain with a dielectric, and provides an electrical umbilical to the SSID through the adaptor. The conductive strip can be threaded back through the catheter to a fitting (not shown) at its proximal end, as discussed previously. At a distal portion of the conductor strip, individual conductive wires 32 are separated from the non-conductive strip and are bonded to conductive pads (not shown in FIG. 26 to 28) that are present on the adaptor. Thus, the adaptor provides a power conduit from the umbilical to the SSID.

With reference to FIG. 29, in another embodiment, shown generally at 250, the catheter 12 can comprise an extruded tubing section having a central lumen 252 and a plurality of auxiliary lumens 254 disposed around the periphery of the central lumen. With this arrangement, imaging fluid can be conveyed to the distal tip portion 15 of the catheter via the central lumen or one or more of the auxiliary lumens. The central or auxiliary lumens can also carry a conductive line, such as conductive wires 32, that are configured to provide electrical signal, power, ground, and/or control to and from the SSID 38. Electrical signal is carried from the umbilical to the SSID via conductive strips 56 present on an adaptor 52. The conductive strips provide an electrical connection between electrical wires of the umbilical and the SSID. The conductive strips can be comprised of conductive metals, a conductor layed down on a captain strip as previously described, or can be insulated wire or non-insulated wires, as appropriate. In this embodiment, the SSID includes light-emitting diodes (LEDs) 66 configured to illuminate the area immediately adjacent the distal tip portion, and an imaging array 48.

As mentioned, electrical connections and mounting of the SSID 38 is facilitated by an adaptor 52. The adaptor carries the SSID 38 and is bonded to the remainder of the catheter, including a micromachined segment 46. A lens 40 is provided that can be bonded to the SSID 38. The lens can be configured to focus an image at a focal plane of the imaging array 48, or it can simply protect the SSID 38 and any filter or additional optical element used. Non-conductive, optically clear adhesive or epoxy can be used to bond the chip to the lens.

The micro-machined segment 46 includes transverse slots 47 cut into the tubing in an alternating pattern as shown in the Figure to provide for increased flexibility at the distal tip portion 15 of the catheter 12. Additional details on construction of similar slotted micro-machined tubing and segments can be found in U.S. Patent Nos. 6,428,489, which is incorporated herein by reference. The micro-machined slots can intersect the auxiliary lumens 254, and can even be made deep enough to intersect the central lumen 252. This allows for transfer of fluid from within the catheter 12 through the slots to the area immediately adjacent the distal tip portion of the catheter. As discussed, this can be used to provide for delivery of an imaging fluid, such as a clear saline, and/or medicament for treatment of an area of anatomy adjacent the distal tip portion when the catheter is positioned within the anatomy of a patient. It also provides the possibility for body fluids adjacent the distal tip portion to be withdrawn for sampling through one or more of the lumens of the catheter.

In another embodiment, tensioning wires (not shown) can be threaded through the auxiliary lumens 254 of the catheter and attached to the proximal end of the adapter 52. By providing a more flexible segment of the catheter tubing and along with tensioning wires, the distal tip portion 15 of the catheter 12 can be made directable by applying tension to one or more of the tensioning wires to deflect the tip of the catheter in a desired direction as is known in the art. In one embodiment, the tensioning wires can be the electrical wires 32 of the umbilical, which can be configured for transferring power, control, ground, and/or image signals along the catheter 12 to and from the distal tip portion 15.

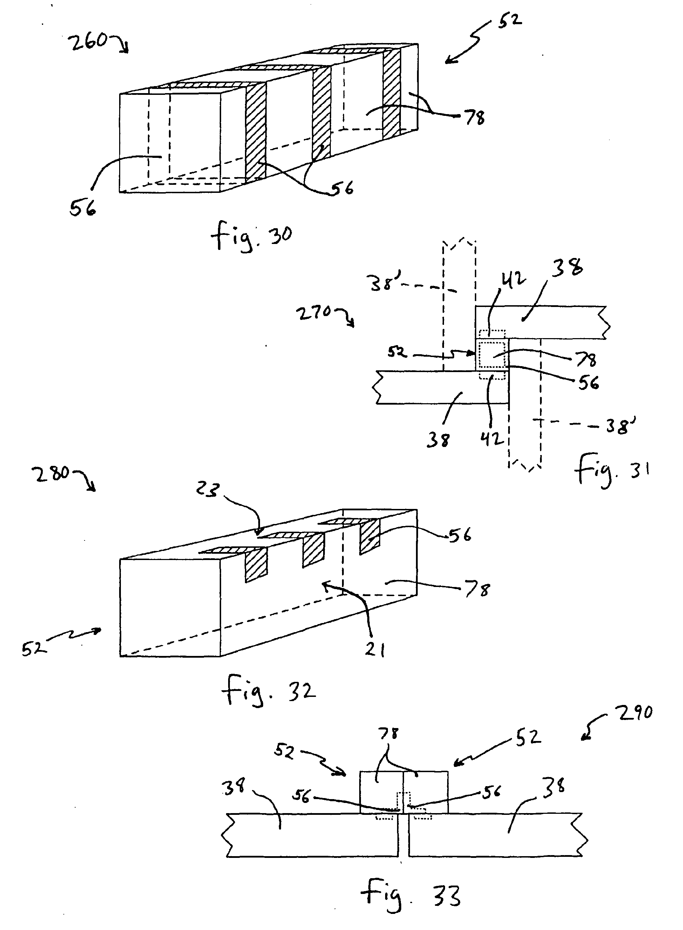

With reference to FIG. 30, a system is shown generally at 260. There, a connector block or adaptor 52 can have a conductive pathway all the way around its body or substrate 78. For example, conductive strips 56 of conductive material can be deposited on the surface by lithographic masking deposition or other known techniques, or the adaptor can be formed by laying up a laminate of conductive and nonconductive materials, and thereafter machining out blocks transverse to the plane of the lay-up to form the bulk body or substrate of the adaptor. The adaptor can then have conductors disposed on the surface, as the conductive layers are exposed on all the surfaces all the way around the connector body. It will be appreciated that having the conductors interconnect locations on surfaces all the way around the counter block can be useful. For example, in one application of this embodiment, the adaptor can be used in any rotational orientation around its lengthwise axis.

With reference to system 270 of FIG. 31, it will be appreciated that an adaptor 52 such as that discussed in FIG. 30 can be useful in connecting chips and other structures in a variety of ways. Specifically, an adaptor 52, including a substrate 78 having a conductive strip 56, connects two opposite surfaces of the adaptor. In the embodiment shown, two devices, such as two SSIDs 38, each have conductive pads 42. Both the conductive pathway between the conductive pads of the SSIDs and a mechanical bond between the two SSIDs can be formed as shown. A number of alternate configurations are possible, as that shown in outline where two SSIDs 38' are connected to the adapter in an alternative configuration.

With reference to FIG. 32, system 280 includes an adaptor 52 that can include a substrate 78 incorporating conductive strips 56 configured as discussed above, each having a conductive pathway from a first side surface 21 to a second side surface 23. The conductive strips can be to those discussed above, which are deposited on the connector body by a masking process, a lithography process followed by etching, or by a number of other ways to form such conductive strips. In another embodiment, the conductors can be formed by machining, etching, or otherwise removing material from the substrate 78 to form slots (not shown) therein. The slots can afterwards be filled with conductive material, and the conductor block can be machine finished to a final shape leaving exposed surfaces of the material in each slot.

FIG. 33 depicts generally at 290, two SSIDs 38 (or other multiple chip interfaces) having conductors such as conductive pads 42, which can be connected by two adaptors 52, each having conductors conductive strips 56 providing a conductive pathway between at least two sides. The substrates 78 or each respective adaptor can then be bonded together so that the conductors meet and provide a conductive pathway. In another embodiment, the conductors can be bonded together first and then together bonded to two chips to form a connection. An additional block which bridges across the two connector bodies can be employed in one embodiment to further enhance the mechanical connection, such as by bonding it to and across the connector blocks.

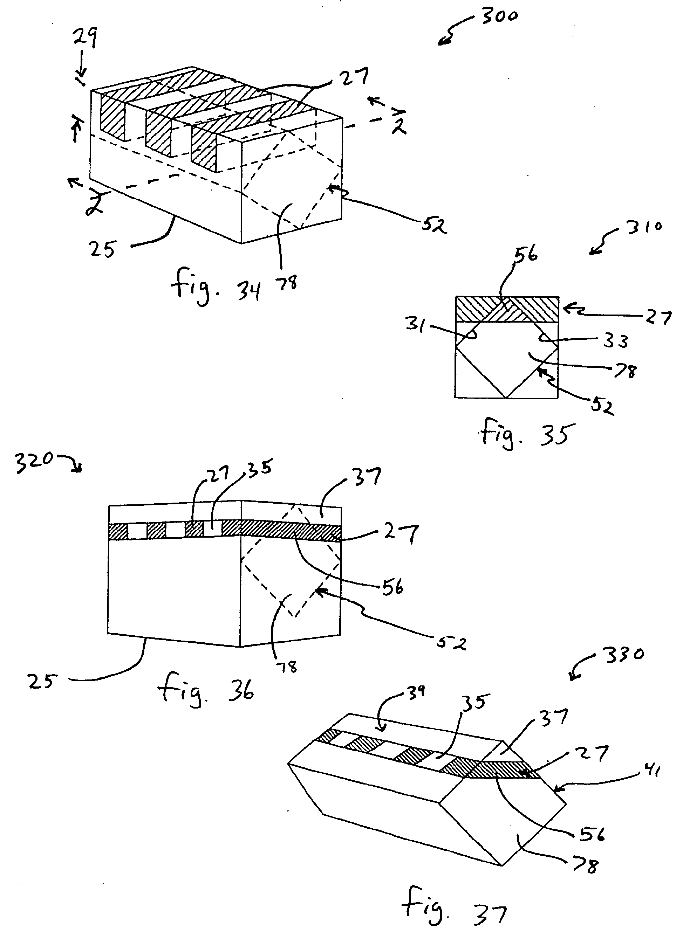

With reference to FIGS. 34 and 35 depicts generally at 300 and 310, respectively, an additional way to make further embodiments of the invention. This system includes starting with a preform block 25 formed of a nonconductive material. Conductive pathways will be created by altering the block at certain locations. For example, the preform can be masked and altered with conductive material 27 as shown, such as by introducing a conductive material into the preform block by crystal diffusion. The mask might simply be a series of long strips and the preform cut be from a flat substrate after the crystal diffusion process. The material of the preform is altered is to a depth 29; and thereafter, the adaptor 52 is machined from the preform. A resulting adaptor 52 has a substrate 78, and a conductive body or strip 56 where the material has been modified intersects a first surface 31 and a second surface 33.

In another embodiment the preform may simply be slotted, such as by using a chip fabrication saw to form the slots of desired width and depth. Thereafter, the slots can be filled with a conductive material. When the conductor material is hardened, the adaptor 52 can be machined free from the preform 25 and the resulting configuration is similar to that described above.

With reference to FIGS. 36 and 37, in another embodiment shown generally at 320 and 330, respectively, the connector body is formed by laying up a laminate configuration having a nonconductive substrate which is overlaid by a layer comprising long strips of conductor material 27 and nonconductive material 35 disposed alternately to provide discrete conductive paths. This is overlaid by a further layer 37 of nonconductive material. It will be understood that the adhesive, or other method used to form the lay-up, will depend on the material. However, conventional bonding using adhesives such as solvents, welding, and the like, can be used.

In another embodiment, the configuration can be formed by forming grooves in the preform block 25 filling the grooves with the conductive material 27 to form the conductors, and then overlaying this with another layer of nonconductive material 37. For example, a ceramic substrate could be provided with grooves filled with an emollient conductor, and then can be lapped flat after the conductor hardens. The top layer, also formed of ceramic, can then be bonded thereto by adhesive. After the preform block has been completed, the adaptor 52 can be cut free by micro-machining, grinding, etc. The resulting adaptor can then include the adaptor substrate 78, and conductive pathways, via conductive strips 56, from a first surface 39 to a second surface 41.

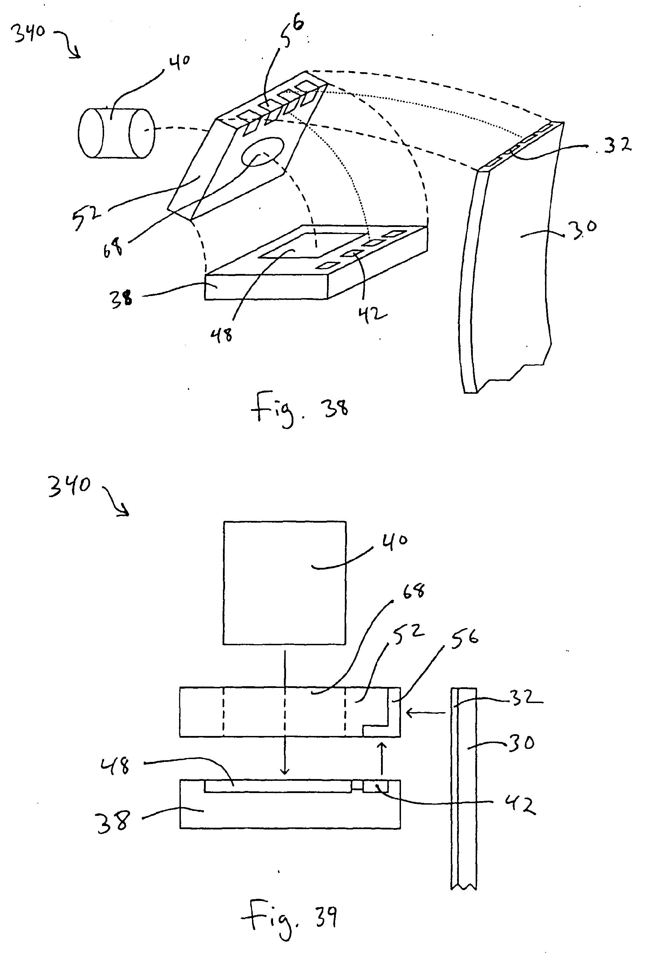

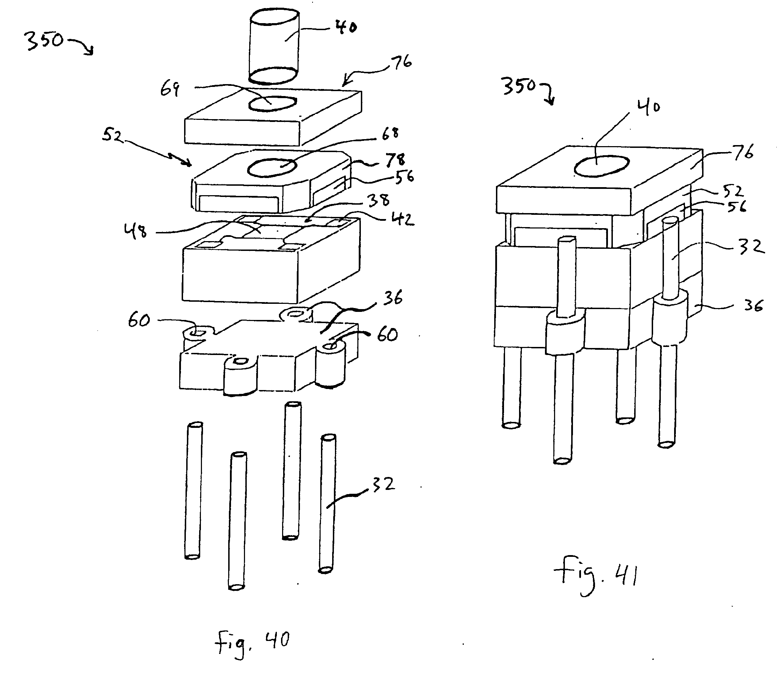

Referring now to FIGS. 38 and 39, an alternative system, shown generally at 340, includes a lens 40, such as a GRIN lens, that is optically coupled to an imaging array 48 of an SSID 38. In one embodiment, the lens can be coupled to the imaging array by a clear adhesive material. Conductive pads are also present on the SSID and are configured to provide electrical signal, power, ground, and/or control to and from the SSID.

The SSID 38 can comprise a silicon or silicon-like substrate or amorphous silicon thin film transistors (TFT) having features typically manufactured therein. Features including the imaging array 48, the conductive pads 42, metal traces (not shown), circuitry (not shown), etc., can be fabricated therein. With respect to the conductive pads, the connection between conductive pads and the adaptor 52 can be through soldering, wire bonding, solder bumping, eutectic bonding, electroplating, and conductive epoxy. However, with this configuration, a direct solder joint having no wire bonding between the conductive strips and the conductive pads can be preferred, as good steerability can be achieved with less risk of breaking electrical bonding. The same is true with respect to the electrical connection between the electrical wires of the umbilical and the conductive strips of the adaptor. In one embodiment, the umbilical can provide power, ground, clock signal, and output signal to the SSID through the adaptor. Other integrated circuit components can also be present for desired applications, such as light emitting diodes (LEDs) (not shown) for providing light to areas around the GRIN lens. If LEDs are present on the SSID, the adaptor can be of a clear material to allow light to pass therethrough. As the above described component are exemplary, it is not required that all of these components be present, as long as there is a visual or photon data gathering means, and some means of converting that data to a visual image or a visual reconstruction. The SSID can be any solid state imaging device, such as a CCD, a CID, or a CMOS imaging device.

The lens 40 can be a GRIN lens coated with an opaque coating on the curved surface to prevent light from entering the lens at other than the flat surface that is most distal with respect to the SSID. Alternatively, as the lens 40 is supported by an adaptor 52 having an opening 68, the adaptor can provide a similar function as provided by the opaque coating.

The adaptor 52 includes four conductive strips 56 that are configured to electrically communicate in an "around the comer" configuration. The conductive strips are positioned to contact the conductive pads 42 on the SSID 38, once the adaptor and the SSID are mated together. In this configuration, an umbilical 30 containing conductive wires 32 can be electrically coupled to the conductive strips. When assembled, by innervating the conductive strips with the conductive wires, the conductive pads are thus energized, thereby providing power, signal, ground, and/or control to and from the SSID.

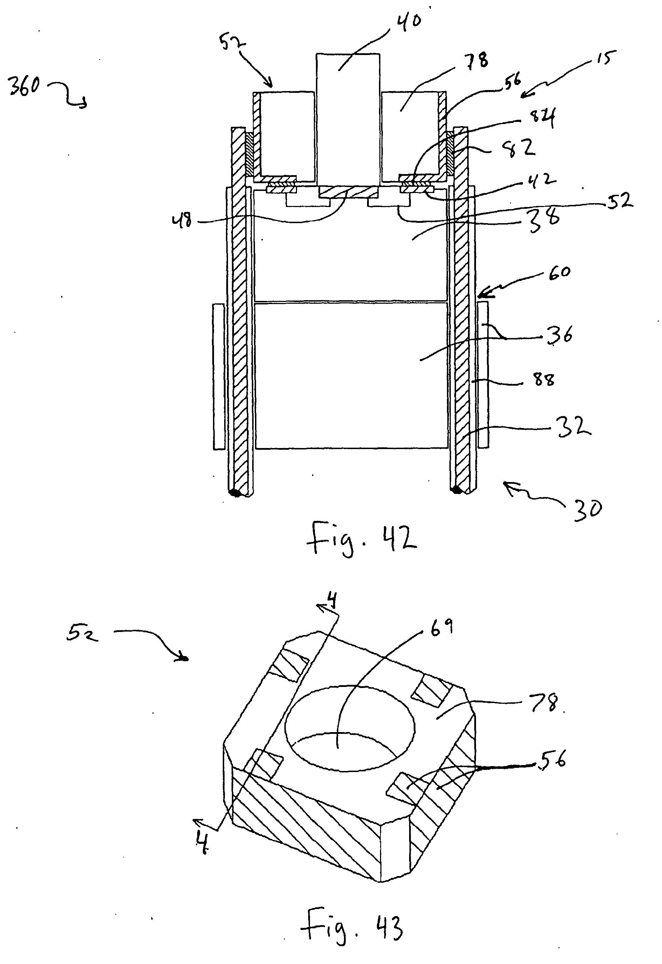

Turning now to FIGS. 40 and 41, a lens 40 is supported by a connector block or adaptor 52, and a supplemental lens holder 76, shown generally at 350. The adaptor and the supplemental lens holder are configured to accept and hold the GRIN lens via respective openings 68, 69. The adaptor can comprise two different materials. A first material can be a non-conductive material that forms the substrate 78. The substrate supports one or more conductive strips 56 formed of an electrically conductive material, such as a metal. The conductive strips act to provide electrical contact between an umbilical, which comprises insulated conductive wires 32 in this embodiment, and conductive pads 42 present on the SSID 38. The conductive wires can be coupled to the conductive strips using a conductive bonding material, such as silver or gold filled epoxy, silver or gold solder, or another suitable adhesive or eutectic conductive substance.

Each of the conductive wires 32 can also be supported in a proper position by a utility or wire guide 36, and more specifically, by feeding each wire through lumens 60 defined by the utility guide. The conductive wires provide electrical contact through an umbilical between the adaptor 52 (and ultimately the SSID chip) and a computer interface (not shown), linking the SSID with another structure, e.g. a power source, signal processor, ground, or controller (not shown). The conductive wires can also be used as tensioning wires to provide steerability. However, this is not required, as other means of controlling the direction of pointing of a head of the camera can be implemented.

Each of the conductive strips 56 is configured to transfer current from a location on a side of the adaptor 52 to a location on a bottom surface of the adaptor. More detail concerning the conductive strips can be appreciated with reference to FIGS. 19 and 20. Still referring to FIGS. 17 and 18, the conductive pads 42 are electrically coupled to an imaging array 48 of the SSID 38. Additionally, each of the conductive wires 32 is electrically coupled to a corresponding conductive strip 56. Thus, by alignment of the conductive strips with the conductive pads, when the adaptor is mated to the SSID, electrical power and data signals can be sent to and from a source (not shown), through the conductive wires of the umbilical, through corresponding conductive strips, through corresponding conductive pads, and to and from the imaging array.

Referring now to FIGS. 42 and 43, a system shown generally at 360, includes a distal tip portion 15 of an imaging catheter comprising a lens 40, such as a GRIN lens. The lens is supported laterally by a connector block or adaptor 52. A supplemental lens holder as described previously can also be used, but is not present in this embodiment. Again, the adaptor has a dual function, including providing support for the lens, and providing electrical communication between an electrical umbilical 30 and an SSID 38. The adaptor typically includes a non-conductive substrate material 78 and a conductive strip 56. The non-conductive substrate material can be a refractory and/or polymeric material such as SU-8 polymer material manufactured by IBM, Foturan which is a photosensitive glass manufactured by Coming, polymethyl methacrylate (PMMA) molded by Lithographie Galvanoformung Abformung (LIGA), or oxidized deep reactive ion etched (DRIE) silicon. In one embodiment, the material can be substantially transparent so that verification of bonding of the adaptor to the SSID can be more easily obtained by visual inspection, such as by a microscope. If the SSID has a light source, such as an LED incorporated in it, the transparent block material enables the transmission of light forward. Conductive strips, as mentioned, are also attached to the adaptor, and thus, a path of electrical conductivity can be effectuated around a corner from a side surface to a bottom surface of the adaptor. A central aperture 69 for supporting the lens is also included in the adaptor.

An electrical umbilical 30, including conductive wires 32, can comprise an insulator coating portion 88. The conductive wires are supported by a utility guide 36 having multiple lumen 60. In this embodiment, the insulator coating portion is removed adjacent the distal ends of the wires. This is done to provide a means of contacting the conductive wires 32 with the conductive strips 56, so that electrical contact and communication can be provided between the SSID 38 and the power source, controller, and/or processor (not shown) through the conductive wires. In this embodiment, each conductive wire is attached to a conductive strip at a side surface, and is held in electrical contact therewith by a conductive bonding material 82 that can be used to electrically couple two conductive lines, such as that discussed above.

At the bottom surface of the adaptor 52, the conductive strip 56 also contacts the conductive pad 42 of the SSID 38. This contact is also fixed by the use of a conductive bonding material 84, such as that described previously. The SSID can comprise an imaging array 48, additional I.C. elements (not shown), conductive pads, and an electrical connection 52 between the connective pads and the imaging array. Additionally, the SSID can further include a microprocessor as well as light sources, such as LED's, as described above.

The lens 40 can be in close proximity or in contact with the imaging array 48 as the lens directs and focuses light or photons onto the imaging array. The conductive wires 32 (two of which are not shown in a four wire umbilical system), can provide the dual function of guiding the direction the SSID, as well as provide electrical contact between any power source/signal processors (not shown) and the SSID at distal tip 15 of the catheter, though this dual functionality is not required. For example, steering can be by a micromachined tube, as is known in the art.

The components of a miniature imaging device can be fused together or bonded together as desired. For example an epoxy, such as a UV cure epoxy, can be used to bond the lens 40 to the imaging array 48 of the SSID 38. However, with the use of such epoxy, care should be taken to not use a UV light at an intensity that would damage the SSID or other structures of the device. Other locations where an epoxy or other bonding material can be used to hold components together include the interface between the lens and the adaptor 52, the interface between the substrate of the SSID and the utility guide 36, and between the utility guide and the electrical umbilical 30 (which may or may not also act as tensioning wires). The utility guide can also be bonded to the rest of the catheter (not shown) in this manner.

The particular construction of the embodiments above are facilitated by the very small adaptor 52 that not only acts hold the lens 40 in place over an SSID 38, but also provides a conductive path for transporting electrical power, ground, control, and/or data signals from the conductive wires adjacent a side surface to the conductive pads 42 on the SSID. However, the adaptor provides other advantages. For example, with this configuration, positioning and alignment of the lens on the SSID is more easily accomplished. This is particularly true since the size of this imagine device can be made smaller than about 0.5 mm in total width. Additionally, because the wires are attached to the adaptor on a side surface, there is no need to bend the electrical wires. This provides better strength and easier assembly for the connections for the wires, and for the miniature-imaging device as a whole. Thus, in this embodiment, the configuration of the adaptor facilitates the manufacturing of a very small imaging device.

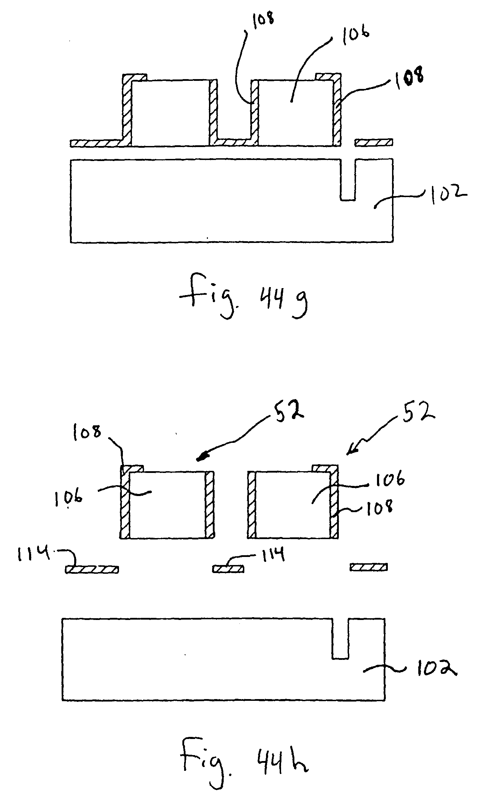

Turning now to how such an adaptor 52 can be fabricated in one embodiment, FIGS. 44a-h depict the manufacture of two adaptors. This is shown as exemplary, as one can be made individually, or alternatively, more than two can be made together, either by the process described below or by other known chip manufacturing processes. The figures are shown in cross section, and one of the two adaptors is shown along line 4-4 of FIG. 43. FIGS. 44a-h will be discussed collectively and sequentially.

With reference to FIG. 44a, a substrate 102 is provided that will be used to make an adaptor. The substrate can be, for example, a silicon wafer. To the substrate is applied or grown a removable layer 104. If the substrate 102 is a silicon wafer, then the removable layer 104 can be a thermal silicon dioxide layer. An appropriate thickness can be about 0.5 microns. This provides a working base to fabricate one or more primary lens holders.

A polymer layer 106, such as SU-8 manufactured by IBM, can be spun onto the silicon dioxide layer having a desired thickness dimension. Next, the layers are selectively exposed to UV light, in the presence of a mask, to form desired structure. These polymer blocks can each become the substrate of an adaptor. An example size can be a structure having a height of 300 microns, a length of 360 microns and a width of 380 microns. The center aperture that will hold the lens can be about 300 microns in diameter. Thus, if the length is 360 microns, and the aperture is 300 microns in diameter, a 30 to 35 micron distance between the edge of the aperture and the edge of the polymer is all that may be present in this embodiment. The dimensions above are given by way of example. However, larger and even smaller blocks can be fabricated in accordance with the methods described herein.

On top of the polymer 106, a metal trace material 108 is sputtered or evaporated at an appropriate thickness. The metal trace material will ultimately become the conductive strip. Gold, for example, can be used as the metal trace material. Additionally, the appropriate thickness of the deposited metal trace depends upon the size of the SSID being made. However, commensurate with the present example, a thickness of about 0.5 microns can be used.

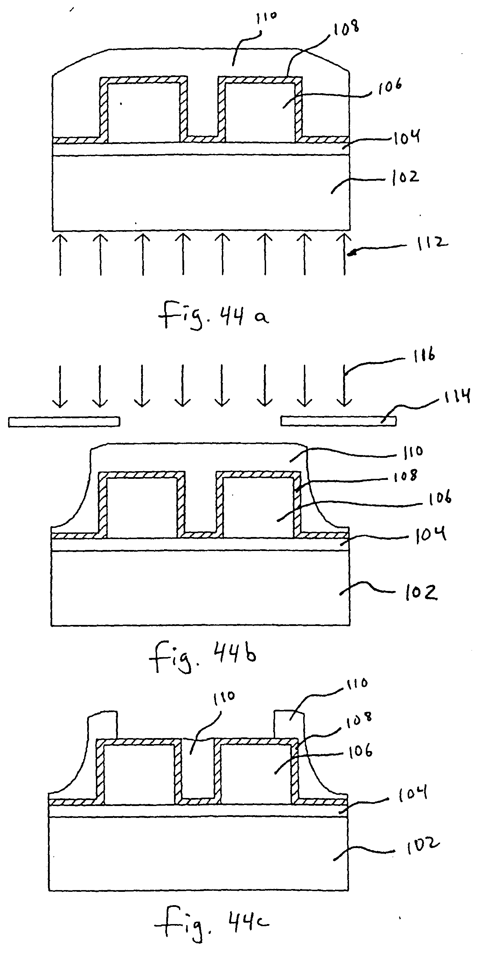

A photoresist material 110 can now be added atop the metal trace material. The photoresist material can be any material that can be altered when exposed to energy, such as heat and UV light. Further, the photoresist material can be diluted to achieve a desired result, depending on the application. In one embodiment, a photoresist material can be used that is sensitive to heat by way of evaporation of a solvent. The UV light can be used to selectively expose the photoresist such that the UV exposed photoresist can be developed away in a developer (using positive photoresist), or the underexposed photoresist can developed away in a developer (using negative photoresist). As different thicknesses are present, the photoresist can evaporate off at different speeds, leaving the photoresist material configured such as that shown in FIG. 44b. Depending on the photoresist material used, the thickness differential can be as much as 10 fold or more, e.g., 2 microns in some areas and 20 microns in other areas. Once the photoresist material 110 is configured as desired, then from a direction opposite the substrate 102, the photoresist material can be exposed to UV light 116. A photomask 114 can be used such that only a discrete desired portion of the photoresist material is developed as shown in FIG. 44c. Additionally, only the thinner portion of the photoresist material, i.e., the top portion, is removed at this time.

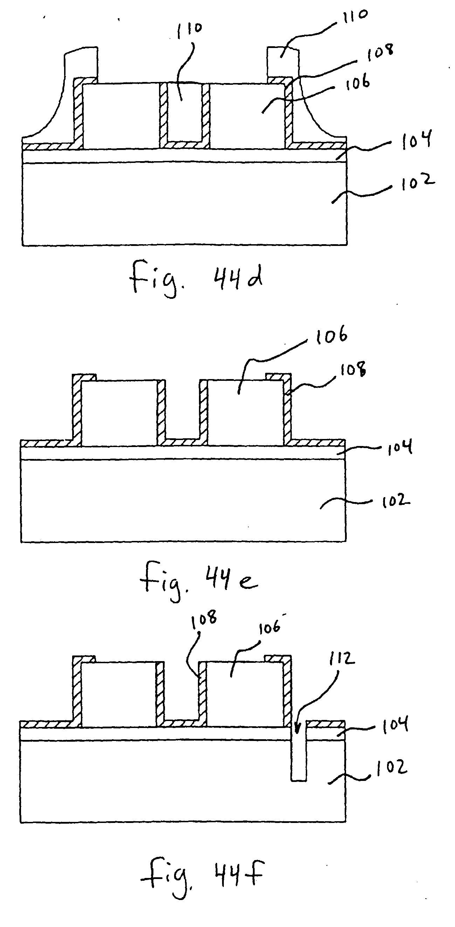

In FIG. 44c, the photoresist material is removed such that an exposed section of the metal trace element can be removed by, for example, wet etching or dry etching. FIG. 44d shows the state of the photoresist material after portions are removed as described above. Next, as shown in FIG. 44e, the photoresist material is completely removed. The photoresist material can be removed by using a material known to react with the chosen photoresist material. In one embodiment, acetone can be used to remove the photoresist material.

Next, shown in FIG. 44f, a saw cut 112 can be made into the substrate, e.g., approximately through half of the substrate using a chip fab saw, for example. This step creates an opening for removal of the removable layer 104, as shown in FIG. 44g. For example, if the removable layer 104 is silicon dioxide, then hydrofluoric acid (HF) can be used to react with the removable layer, releasing the polymer 106 from its connection with the substrate. Once the silicon dioxide has been removed, the metal trace sections 108 that are not adhered to the polymer 106 can be broken off as shown in FIG. 44h. Thus, two adaptors 52 remain separated from the substrate 102, each of which can be used in conjunction with a catheter borne SSID such as that described above.

The embodiments thus far shown depict GRIN lenses optically coupled to imaging arrays of SSIDs by a direct bonding or coupling. However, the term "optically coupled," also provides additional means of collecting light from GRIN lens and coupling it to an imaging array of an SSID. For example, other optical devices can be interposed between a GRIN lens and an SSID, such as a color filter, fiber optic, or any shape optical lens including a prism or wide angle lens. Specifically, a system of converting monochrome imaging to multiple colors can be accomplished by utilizing a filter having a predetermined pattern, such as a Bayer filter pattern. The basic building block of a Bayer filter pattern is a 2x2 pattern having 1 blue (B), 1 red (R), and 2 green (G) squares. An advantage of using a Bayer filter pattern is that only one sensor is required and all color information can be recorded simultaneously, providing for a smaller and cheaper design. In one embodiment, demosaicing algorithms can be used to convert the mosaic of separate colors into an equally sized mosaic of true colors. Each color pixel can be used more than once, and the true color of a single pixel can be determined by averaging the values from the closest surrounding pixels.

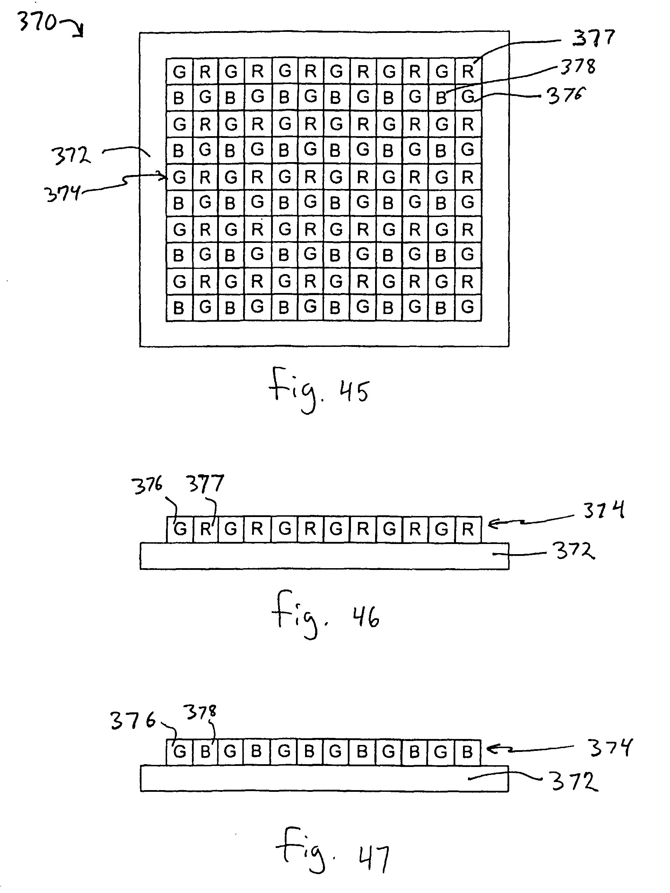

Specifically, with reference to FIG. 45 to 47, a color filter insert, shown generally at 370, can comprise a substantially optically clear filter substrate 372 and a color filter mosaic portion 374. The filter insert as a whole is made up of green transparent color material 376, blue transparent color material 378, and red transparent color material 377. Each of the transparent color material 376, 378, 377 can be polymerized color resins such as those available from Brewer Science. In one embodiment, the green color material 376 can be put down on the clear filter substrate first, and then the red 377 and blue 378 color material can be positioned in the appropriate spaces provided by the green material. Each transparent color material can be configured to be the size of an SSID image array pixel. The optically clear filter substrate can be, for example, a polymeric material such as SU-8 available from IBM, having a thickness of about 20 microns, though other thickness can be used.

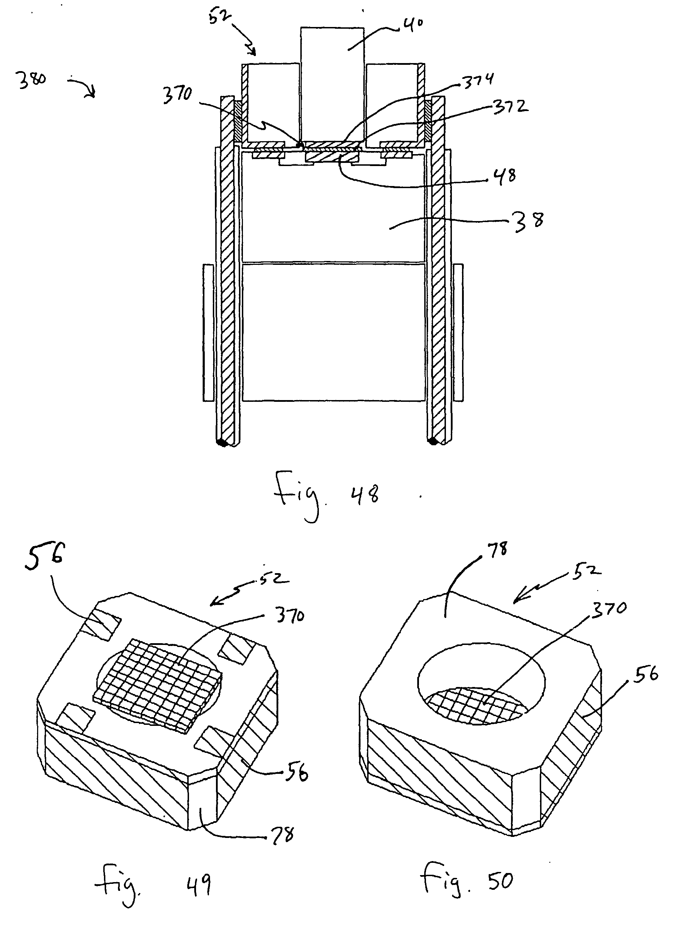

Turning now to FIG. 48, a system 380, including a color filter insert 370 having an optical clear filter substrate 372 and the color filter mosaic portion 374, can be positioned between a lens 40 and an imaging array 48 of an SSID 38. Any bonding technique or mechanical coupling can be used to connect the SSID to the lens through the color filter insert or fiber optic in order to make the optical connection, such as bonding by an optically clear bonding epoxy. Other structures are shown in FIG. 48 that are similar to those described with respect to FIG. 42.

FIGS. 49 and 50 depict one possible relationship between a color filter insert 370 and an adaptor 52 (where the color filter can be integrated directly on the adaptor) from a bottom perspective view and a top perspective view, respectively. The adaptor includes a substrate 78 and conductive strips 56, as previously described.

Turning now to FIG. 51, a system 390, including a color filter insert having an optical clear filter substrate 372 and the color filter mosaic portion 374, can be positioned between a lens 40 and an imaging array (not shown) of an SSID 38. FIG. 52 depicts an alternative system 400, wherein a fiber optic 202 is used to optically couple a lens 40 with an imaging array (not shown) of an SSID 38. Any bonding technique or mechanical coupling can be used to connect the SSID to the lens through the color filter insert or fiber optic in order to make the optical connection, such as bonding by a clear bonding epoxy. In both FIGS 51 and 52, as described previously, the imaging device at the distal tip 15 can include a utility guide 36 for supporting or carrying the umbilical 30, which can include an electrical wires 32 and other utilities (not shown). Both FIGS. 51 and 52 also depict micromachined tubing 46 to support and direct the camera.

As will be appreciated, an imaging device in accordance with principles of the invention can be made very small, and is useful in solving certain imaging problems, particularly, that of imaging a remote location distal of a small opening, for example in human anatomy distal of a small orifice or luminal space (anatomical or artificial, such as a trocar lumen), or via a small incision, etc., the configuration facilitates miniaturizations, and simplifies assembly. In fact, because of the solid state nature of the SSID and other features, these cameras can be made to be micron-sized for reaching areas previously inaccessible, such as dental/orthodontics, fallopian tubes, heart, lungs, vestibular region of ear, and the like. Larger lumens or cavities can be view with a greater degree of comfort and less patient duress, including the colon, stomach, esophagus, or any other similar anatomical structures. Additionally, such devices can be used for *in situ* tissue analysis.

It is to be understood that the above-referenced arrangements are illustrative of the application for the principles of the present invention. Numerous modifications and alternative arrangements can be devised without departing from the spirit and scope of the present invention while the present invention has been shown in the drawings and described above in connection with the exemplary embodiments(s) of the invention. It will be apparent to those of ordinary skill in the art that numerous modifications can be made without departing from the principles and concepts of the invention as set forth in the claims.

## Claims

1. A miniaturized imaging device, comprising:
(a) multiple imaging arrays, each carried by an SSID; and
(b) multiple GRIN lenses optically coupled to the multiple imaging arrays, respectively, wherein each of the multiple imaging arrays is optically coupled to a single GRIN lens.

2. A miniaturized imaging device as in claim 1, wherein the multiple imaging arrays are carried by a common SSID.

3. A miniaturized imaging device as in claim 1, wherein the multiple imaging arrays are carried by multiple SSIDs, respectively.

4. A miniaturized imaging device as in claim 3, wherein the multiple imaging arrays are coplanar, facilitating stereoscopic imaging.

5. A miniaturized imaging device as in claim 1, wherein the multiple SSIDs are positioned along a common umbilical.

6. A miniaturized imaging device as in claim 1, wherein the multiple imaging arrays are positioned to provide multiple non-parallel views.
